# EUROPEAN PATENT APPLICATION

(11) **EP 2 252 070 A2**
(43) Date of publication of application: **17.11.2010**
(21) Application number: 10161935.1
(22) Date of filing: 05.05.2010
(51) Int. Cl.: H04N 13/00

(54) **Display control program and method for controlling display capable of providing three-dimensional display**

(30) Priority: 13.05.2009 JP 2009116396
(71) Applicant: Ohta, Keizo, Kyoto-shi Kyoto 601-8501 (JP)
(72) Inventor: Ohta, Keizo, Kyoto-shi Kyoto 601-8501 (JP)
(74) Representative: Grünecker, Kinkeldey, Stockmair & Schwanhäusser Anwaltssozietät

(57) **Abstract**

A display control program and an information processing device capable of appropriately adjusting a parallax between images involved with three-dimensional display while further mitigating processing load are provided. A display displacement search range covering a prescribed range can be defined by using a matching position. While moving a vertex of an input image from a left end to a right end of this display displacement search range, similarity between images within a focused area at each relative position is calculated A display displacement amount is determined in correspondence with a relative position achieving the highest similarity among calculated similarities. The display displacement search range is set to be narrower than a reference search range described above.

## Description

### BACKGROUND OF THE INVENTION

### Field of the Invention

The present invention relates to a display control program and a method for controlling a display capable of providing three-dimensional display. In particular, the present invention relates to a technique for realizing three-dimensional display with less processing load in three-dimensional display using two images having a parallax.

### Description of the Background Art

A method for providing three-dimensional display using two images having a prescribed parallax has conventionally been known. Namely, on the premise that a user views different images with left and right eyes respectively in such a manner as seeing an image for right eye in a field of view of the user's right eye and seeing an image for left eye in a field of view of the user's left eye, a parallax is provided between the image for the right eye and the image for the left eye so that the user can be given a three-dimensional effect.

Typically, images picked up by two respective image pick-up portions (what is called stereo cameras) arranged at a prescribed distance from each other symmetrically with respect to an optical axis to an object originally have a prescribed parallax. Therefore, by displaying images picked up by a right camera arranged on the right with respect to the optical axis to the object and a left camera arranged on the left thereto as the image for the right eye and the image for the left eye respectively on a display capable of providing three-dimensional display as described above, the object can three-dimensionally be displayed.

Alternatively, a plurality of images having a prescribed parallax can be obtained also by carrying out image pick-up a plurality of times by changing a position of one image pick-up portion along a horizontal direction, and thus the object can three-dimensionally be displayed also by using such picked-up images.

If images having too great a parallax (for which a strong three-dimensional effect has been set) are used in three-dimensional display utilizing a parallax as described above, the user may feel uncomfortable or the images do not look three-dimensional.

Then, processing for achieving three-dimensional display by adjusting a parallax involved with display is performed by shifting the image for the right eye and the image for the left eye toward left and right, respectively. For example, Japanese Patent Laying-Open No. 2004-007395 discloses a technique for shifting images such that a parallax coincides with a parallax limit (a limit value of a parallax range within which a user can view an image without feeling uncomfortable).

In order to adjust a parallax between images as described above, a correspondence between input images for right and left eyes should be specified. Namely, a specific portion of an object seen in the image for the right eye and a corresponding portion of the object seen in the image for the left eye should be detected. Such processing is generally referred to as stereo matching and it is performed based on a matching score regarding color information between images, a matching score regarding a shape obtained by contour extraction, or the like. For accurate matching, however, a matching score should be evaluated for all areas in an image and high load is imposed by the processing.

### SUMMARY OF THE INVENTION

The present invention was made to solve such problems. An object of the present invention is to provide a display control program and a method capable of appropriately adjusting a parallax between images involved with three-dimensional display while further mitigating processing load.

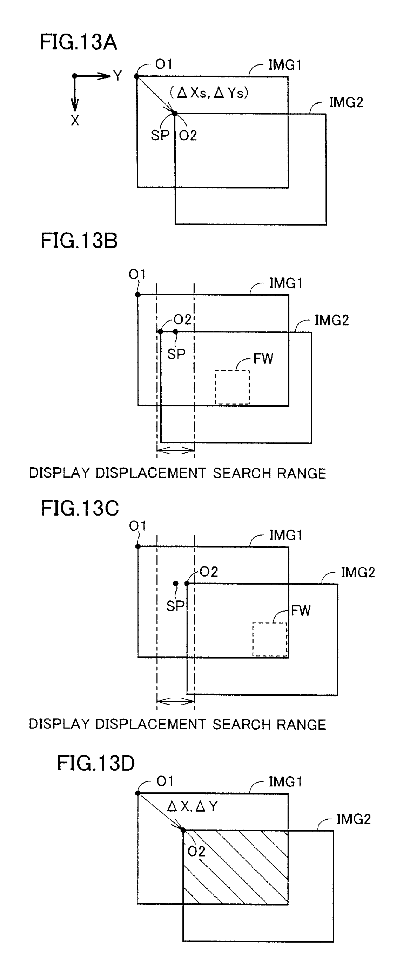

According to a first aspect of the present invention, a display control program for controlling a display (10: reference numeral used in an embodiment shown below; to be understood similarly hereinafter) capable of providing three-dimensional display is provided. The present display control program causes a computer (1) of the display to function as: base relative displacement amount determination means (100; 222; S104, S106, S108, S110, S112) for determining as a base relative displacement amount (Fig. 13: ΔXs, ΔYs), a relative displacement amount involved with a correspondence between a first image (IMG1) and a second image (IMG2) having a prescribed parallax, based on results of comparison between an image included in at least partial area (FW) of the first image and an image included in at least partial area (FW) of the second image while at least one area thereof is varied such that a relative displacement amount between the first image and the second image is within a first range, among relative displacement amounts in the first range; display target area setting means (100; 206, 216; S128) for setting a first display target area (DA) which is an area of the first image to be displayed on the display and a second display target area (DA) which is an area of the second image to be displayed on the display such that the first display target area and the second display target area are in correspondence with each other; display relative displacement amount determination means (100; 222; S130, S132, S134) for determining as a display relative displacement amount (Fig. 13: AX, AY), a relative displacement amount involved with the correspondence between a first display target area and a second display target area, based on a result of comparison between the image (FW) included in at least partial area of the first image and the image (FW) included in at least partial area of the second image while at least one area thereof is varied such that the relative displacement amount is within a second range narrower than the first range, which is a prescribed range with the base relative displacement amount serving as a reference, among relative displacement amounts in the second range; and three-dimensional display processing means (100, 112, 122; 206, 216; S114) for causing the display to provide three-dimensional display of a first partial image included in the first display target area and a second partial image included in the second display target area based on the display relative displacement amount.

Here, the relative displacement amount refers to a displaced amount between one image and another image. The base relative displacement amount determination means is means for determining a base value (a base relative displacement amount) indicating how much corresponding positions are displaced from each other between one image and the other image. In determination, one image and the other image are compared with each other by displacing these images within a first range ("while at least one area thereof is varied such that a relative displacement amount ... is within a first range"). In such determination, the base relative displacement amount determination means compares the images with each other, for example, by displacing a determination area of one image and a determination area of the other image within the first range ("while at least one area thereof is varied such that a relative displacement amount ... is within a first range"). Here, only the determination area of the other image may be displaced, both of the determination area of one image and the determination area of the other image may be displaced, or only the determination area of one image may be displaced. When both of the determination area of one image and the determination area of the other image are displaced, the total displaced amount for both images is set as the relative displacement amount and that relative displacement amount is set within the first range. Typically, determination is made based on comparison between the image included in at least partial area of the first image and the image included in at least partial area of the second image by varying at least one area such that the relative displacement amount between the first image and the second image is within the first range.

In addition, the relative displacement amount involved with the correspondence between the first image and the second image refers to an index how much one image is displaced from the other image, with attention being paid to a prescribed area or an object included in the first image and the second image.

According to this first aspect, initially, the relative displacement amount of the first and second images having a prescribed parallax is determined based on comparison between the image included in at least partial area of the first image and the image included in at least partial area of the second image while varying the relative displacement amount within the first range. Typically, image matching processing between the first image and the second image is performed to determine a base relative position between these images based on a result of the matching processing. In succession, image matching processing for a second range narrower than the first range with the determined relative displacement amount serving as the reference is performed, so that a display relative displacement amount between the first display target area and the second display target area is determined. In addition, display of the first and second images is controlled based on the determined display relative displacement amount. Thus, appropriate three-dimensional display of an object included in the first display target area and the second display target area can be provided to the user. Moreover, since image matching processing only for the second range with the determined base relative displacement amount serving as the reference should be performed, a parallax can be adjusted with further lower processing load and responsiveness to the user and operability can be enhanced.

According to a preferred second aspect of the present invention, the display relative displacement amount determination means determines the display relative displacement amount by using the image included in at least partial area within at least one of the first and second display target areas as an image to be compared.

According to the second aspect, since the display relative displacement amount is determined based on an actually displayed image, more reliable and appropriate three-dimensional display can be provided.

According to a preferred third aspect of the present invention, the three-dimensional display processing means changes a position of at least one of the first and second display target areas based on the display relative displacement amount determined by the display relative displacement amount determination means and causes the display to provide three-dimensional display using the first and second partial images included in the resultant first and second display target areas respectively.

According to the third aspect, typically, images included in areas to be focused on in the first and second images are set as the first and second partial images, so that more reliable and appropriate three-dimensional display of these areas to be focused on can be provided.

According to a preferred fourth aspect of the present invention, the display relative displacement amount determination means updates the display relative displacement amount (100; S116, S118) in response to change of content of an image to be displayed on the display.

According to the fourth aspect, each time the content of the image to be displayed on the display changes, a parallax between the images involved with three-dimensional display (a display relative displacement amount) is adjusted again. Therefore, appropriate three-dimensional display can always be provided to the user.

According to a preferred fifth aspect of the present invention, the display relative displacement amount determination means is configured to perform display target area change processing for changing a position and/or a size of the first display target area and a position and/or a size of the second display target area in response to an instruction to change a position and/or a size of an area to be displayed in three-dimensional display on the display, and the display relative displacement amount determination means updates the display relative displacement amount by performing the display target area change processing based on the resultant area to be displayed (100; S118, S130, S132, S134).

According to the fifth aspect, typically, when change in a position and/or a size of the area to be displayed such as zoom-in display, zoom-out display and scroll display is indicated, the content of the image displayed on the display is naturally changed and hence the display relative displacement amount should also be updated. In other words, if the display relative displacement amount is not updated in spite of change in the content of the displayed image, a three-dimensional effect provided to the user is varied, which results in the user's uncomfortable feeling. Even when the same image is displayed on the display, processing load may be increased and consequently lowering in responsiveness to the user and operability may be caused by image matching processing over a wide range as in determining a reference relative position, because a zoom-in display and zoom-out display operation (a zoom operation) or a scroll operation is assumed to be repeated many times.

According to the fifth aspect, however, when such an operation as zoom-in display, zoom-out display and scroll display is requested, image matching processing is performed only for the first range including the determined reference relative position. Therefore, processing load can further be reduced and a parallax can be adjusted, and responsiveness to the user and operability can be enhanced.

According to a preferred sixth aspect of the present invention, the display relative displacement amount determination means sets a first determination area in the first image and sets a second determination area in the second image, the first determination area and the second determination area are set in correspondence with each other, the first determination area is set with the first display target area serving as a reference and the second determination area is set with the second display target area serving as a reference, and the display relative displacement amount determination means compares an image included in the first determination area and an image included in the second determination area with each other.

According to the sixth aspect, since the first determination area and the second determination area are set based on the first display target area and the second display target area respectively, for example, a portion in a displayed image expected to more likely to attract user's attention can be set as the determination area. Therefore, more reliable three-dimensional display of the portion attracting user's attention can be provided.

According to a preferred seventh aspect of the present invention, the display relative displacement amount determination means changes a position and/or a size of the first and second determination areas in response to change in a position and/or a size of the first and second display target areas.

According to the seventh aspect, typically, even when change in a position and/or a size of the display target area such as zoom-in display, zoom-out display and scroll display is made, the first and second determination areas are accordingly changed and hence more reliable and appropriate three-dimensional display can be provided.

According to a preferred eighth aspect of the present invention, the display relative displacement amount determination means sets a determination area frame common to the first and second images, and the display relative displacement amount determination means sets an area of the first image defined by the determination area frame as the first determination area and sets an area of the second image defined by the determination area frame as the second determination area.

According to the eighth aspect, simply by setting a determination area frame common to the first and second images, the first determination area and the second determination area can simultaneously be set. Therefore, processing for setting the determination area can further be simplified and an overlapping portion suitable for three-dimensional display can more appropriately be set.

According to a preferred ninth aspect of the present invention, the display target area setting means sets a display target area frame common to the first and second images, and the display target area setting means sets an area of the first image defined by the display target area frame as the first display target area and sets an area of the second image defined by the display target area frame as the second display target area by setting relative positions of the first and second images with respect to the display target area frame.

According to the ninth aspect, simply by setting a display target area frame common to the first and second images, the first display target area and the second display target area can simultaneously be set. Therefore, processing for setting the second display target area can further be simplified and a display target area suitable for three-dimensional display can more appropriately be set.

According to a preferred tenth aspect of the present invention, the relative displacement amount is varied in response to change in the relative position of at least one of the first and second images with respect to the display target area frame.

According to the tenth aspect, simply by changing the relative position of at least one of the first and second images with the display target area frame serving as the reference, the relative displacement amount can be varied. Therefore, processing for varying the relative displacement amount can further be simplified.

According to a preferred eleventh aspect of the present invention, a position and/or a size of the first and second display target areas is varied in response to change in a position and/or a size of the display target area frame in the first and second images.

According to the eleventh aspect, the first and second display target areas can be changed as appropriate in accordance with change in the display target area frame in the first and second images.

According to a preferred twelfth aspect of the present invention, the base relative displacement amount determination means determines the base relative displacement amount by varying the relative displacement amount of at least one of at least partial area of the first image and at least partial area of the second image such that the areas of the first and second images are arranged and compared within the entire ranges of the first and second images in a horizontal direction.

According to the twelfth aspect, as comparison is made substantially over the entire ranges, however much the relative displacement amount between the corresponding areas in the first image and the second image, that is, between both images, may be, the correspondence between the images can reliably be specified.

According to a preferred aspect of the present invention, the base relative displacement amount determination means determines or updates the base relative displacement amount in response to a user's operation (100; S116, S118, S126, S130, S132, S134).

According to the above aspect, as the user can set again the base relative displacement amount as necessary, a parallax between the images involved with three-dimensional display (a display displacement amount) can appropriately be adjusted in accordance with content of an image displayed on the display, a condition, or the like.

According to a preferred aspect of the present invention, the base relative displacement amount determination means determines or updates the base relative displacement amount in response to input of a new first or second image (100; S116, S130, S132, S134).

According to the above aspect, each time the content of the displayed image is changed, the base relative displacement amount is automatically set again. Therefore, appropriate three-dimensional display of a new input image can also be provided.

According to a preferred thirteenth aspect of the present invention, the display target area setting means calculates a matching score between an image included in at least partial area of the first image and an image included in at least partial area of the second image a plurality of times while varying the relative displacement amount, and the display target area setting means determines at least one of the first display target area and the second display target area in correspondence with the relative displacement amount achieving the highest matching score among calculated matching scores (100; S300 to S324).

According to the thirteenth aspect, since such an index as a matching score facilitating comparison of evaluation results at respective relative displacement amounts is used, image matching processing can further be simplified and the processing can be faster.

According to a preferred fourteenth aspect of the present invention, processing for comparison while the relative displacement amount is varied includes calculating a matching score at each resultant position by varying the relative displacement amount by a prescribed first variation (S202, S306, S320), specifying the relative displacement amount achieving the highest matching score as a first relative displacement value (S314, S318, S324), calculating a matching score at each resultant position by varying the first image and the second image by a second variation smaller than the first variation, with the first relative displacement value serving as a reference (S210, S212), and specifying a second relative displacement value achieving the highest matching score (S314, S318, S324).

According to the fourteenth aspect, since a target position is successively searched for by switching search accuracy in a plurality of steps, an amount of processing required for search can be reduced. Thus, search processing can be completed in a shorter period of time.

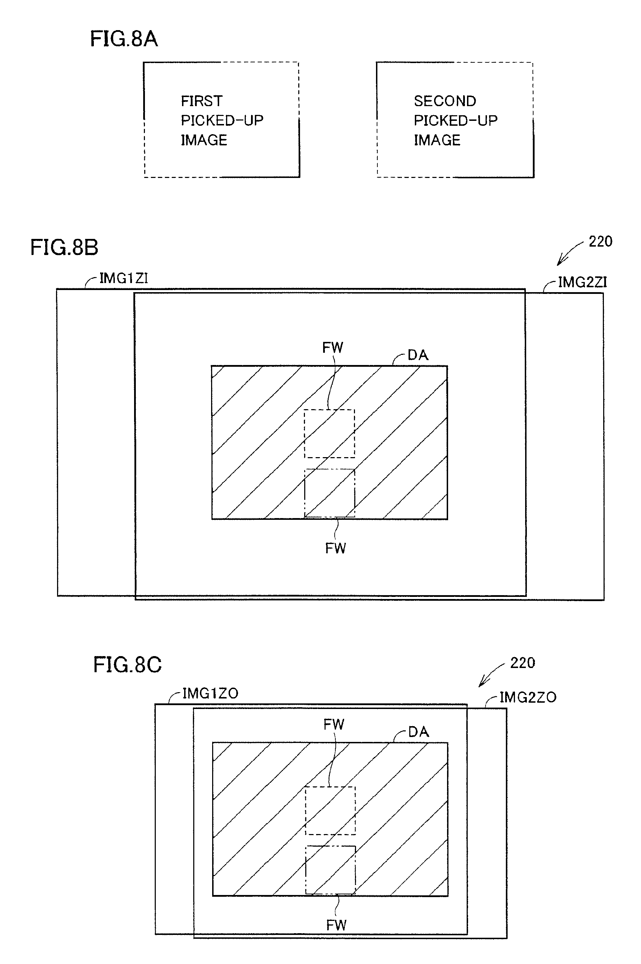

According to a preferred aspect of the present invention, the display relative displacement amount determination means sets the determination area such that it is located in any of a central portion and a lower central portion of a corresponding display target area (Fig. 8).

According to the above aspect, as an area more likely to attract attention is set as the determination area in accordance with characteristics of human sense of sight, more effective three-dimensional display can be provided without a user's explicit instruction.

According to a preferred aspect of the present invention, the display relative displacement amount determination means sets the determination area at a corresponding position in response to a user's operation for an image displayed on the display (100; S126).

According to the above aspect, by designating an object or the like the user wishes to be three-dimensionally displayed while the user views an image shown on the display, appropriate three-dimensional display can be provided. Therefore, in displaying an input image or the like including a plurality of objects different in distance from an image pick-up portion, three-dimensional display of an object on which the user is focusing can selectively be provided.

According to a preferred aspect of the present invention, the display has two image pick-up portions arranged relative to each other so as to have the prescribed parallax, and the present display control program further causes the computer to function as image conversion means for converting picked-up images obtained through image pick-up by the two image pick-up portions into the first and second input images having a prescribed size, respectively.

According to the above aspect in display and/or zoom-out display (a zoom operation) can be made by using picked-up images obtained through image pick-up performed once by two image pick-up portions. Therefore, update of a displayed image in response to a zoom operation can be made faster and an optical system of the image pick-up portion (for example, a zoom function) can be simplified.

According to a preferred aspect of the present invention, the display further has a storage area (104, 220) where data of the first and second images is developed, and the relative displacement amount is determined based on the data developed in the storage area.

According to the above aspect, as the data of the first and second images can be developed in the storage area for virtual arrangement, faster processing can be achieved.

According to a fifteenth aspect of the present invention, a display control method for controlling a display (10) capable of providing three-dimensional display is provided. The present display control method includes: base relative displacement amount determination step (100; 222; S104, S106, S108, S110, S112) of determining a base relative displacement amount (Fig. 13: ΔXs, ΔYs) involved with a correspondence between a first image (IMG1) and a second image (IMG2) having a prescribed parallax by determining a correspondence between an image within the first image and an image within the second image while varying a relative displacement amount between the first image and the second image at a displacement amount within a first range; and three-dimensional display control step (100, 112, 122; 206, 216; S114) of realizing three-dimensional display using a first area image which is an image included in at least partial area (FW) in the first image and a second area image which is an image included in at least partial area (FW) in the second image. The three-dimensional display control step includes the step of determining a relative displacement amount involved with a correspondence between the first area image and the second area image by determining the correspondence between the first area image and the second area image while varying a relative displacement amount between the first area image and the second area image at a displacement amount within a second range narrower than the first range with the base relative displacement amount serving as a reference, and realizes three-dimensional display based on the relative displacement amount (100; 222; S130, S132, S134).

An information processing device according to an aspect of the present invention includes: a display (10) capable of providing three-dimensional display; base relative displacement amount determination means (100; 222; S104, S106, S108, S110, S112) for determining as a base relative displacement amount, a relative displacement amount involved with a correspondence between a first image (IMG1) and a second image (IMG2) having a prescribed parallax, based on results of comparison between an image included in at least partial area of the first image and an image included in at least partial area of the second image while at least one area thereof is varied such that a relative displacement amount between the first image and the second image is within a first range, among relative displacement amounts in the first range; display target area setting means (100; 206, 216; S128) for setting a first display target area which is an area of the first image to be displayed on the display and a second display target area which is an area of the second image to be displayed on the display such that the first display target area and the second display target area are in correspondence with each other; display relative displacement amount determination means (100; 222; S130, S132, S134) for determining as a display relative displacement amount, a relative displacement amount involved with the correspondence between the first image and the second image, based on results of comparison between the image included in at least partial area of the first image and the image included in at least partial area of the second image while at least one area thereof is varied such that the relative displacement amount is within a second range narrower than the first range, which is a prescribed range with the base relative displacement amount serving as a reference, among relative displacement amounts in the second range; and three-dimensional display processing means (100, 112, 122; 206, 216; S114) for causing the display to provide three-dimensional display of a first partial image included in the first display target area and a second partial image included in the second display target area based on the display relative displacement amount.

In the description above, reference numerals for indicating correspondence with embodiments which will be described later, supplemental explanation and the like are provided for better understanding of the present invention, however, they are not intended to limit the present invention in any manner.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing an internal configuration of an information processing device according to an embodiment of the present invention.
Fig. 2 is a schematic cross-sectional view of a display of the information processing device according to the embodiment of the present invention.
Fig. 3 is a schematic diagram showing a state of a certain object for illustrating image matching processing according to the embodiment of the present invention.
Figs. 4A and 4B are schematic diagrams showing images picked up by a first image pick-up portion and a second image pick-up portion respectively, in correspondence with Fig. 3.
Fig. 5 is a diagram for illustrating relative relation in three-dimensionally displaying contents included in a focused area set for the input images shown in Fig. 4B.
Figs. 6A to 6D are diagrams for illustrating exemplary processing when the focused area shown in Fig. 5 is moved.
Fig. 7 is a functional block diagram for controlling the display of the information processing device according to the embodiment of the present invention.
Figs. 8A to 8C are diagrams for illustrating virtual arrangement of input images in the information processing device according to the embodiment of the present invention.
Figs. 9A to 9D are schematic diagrams for illustrating processing for determining a base relative position in the information processing device according to the embodiment of the present invention.
Figs. 10A, 10B, 11A, 11B, 12A, and 12B are diagrams for illustrating search processing according to the embodiment of the present invention.
Figs. 13A to 13D are diagrams for illustrating processing for determining a display displacement amount according to the embodiment of the present invention.
Fig. 14 is a flowchart showing a procedure for overall processing for image display control in the information processing device according to the embodiment of the present invention.
Fig. 15 is a flowchart showing processing in a search processing sub routine shown in Fig. 14.
Fig. 16 is a flowchart showing processing in a matching score evaluation sub routine shown in Fig. 15.

### DESCRIPTION OF THE PREFERRED EMBODIMENTS

An embodiment of the present invention will be described in detail with reference to the drawings. The same or corresponding elements in the drawings have the same reference characters allotted, and description thereof will not be repeated.

### [Device Configuration]

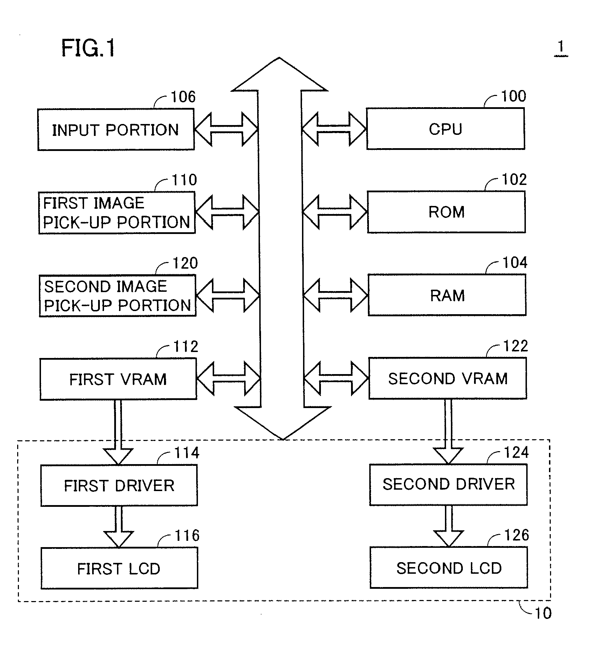

Fig. 1 is a block diagram showing an internal configuration of an information processing device 1 according to an embodiment of the present invention. Referring to Fig. 1, information processing device 1 according to the present embodiment represents a typical example of a computer capable of performing processing using a processor. It is noted that information processing device 1 may be implemented by a personal computer, a work station, a portable terminal, a PDA (Personal Digital Assistant), a portable telephone, a portable game device, or the like.

Information processing device 1 includes a display 10, a CPU (Central Processing Unit) 100, a ROM (Read Only Memory) 102, a RAM (Random Access Memory) 104, an input portion 106, a first image pick-up portion 110, a second image pick-up portion 120, a first VRAM (Video RAM) 112, and a second VRAM 122. It is noted that these portions are connected to each other through an internal bus so that data can be communicated.

Display 10 is capable of providing three-dimensional display to a user. Typically, a front parallax barrier type configuration having a parallax barrier as a parallax optical system is adopted for display 10. Namely, display 10 is configured such that, when the user faces display 10, light beams from different pixels enter fields of view of the user's right and left eyes respectively, owing to the parallax barrier.

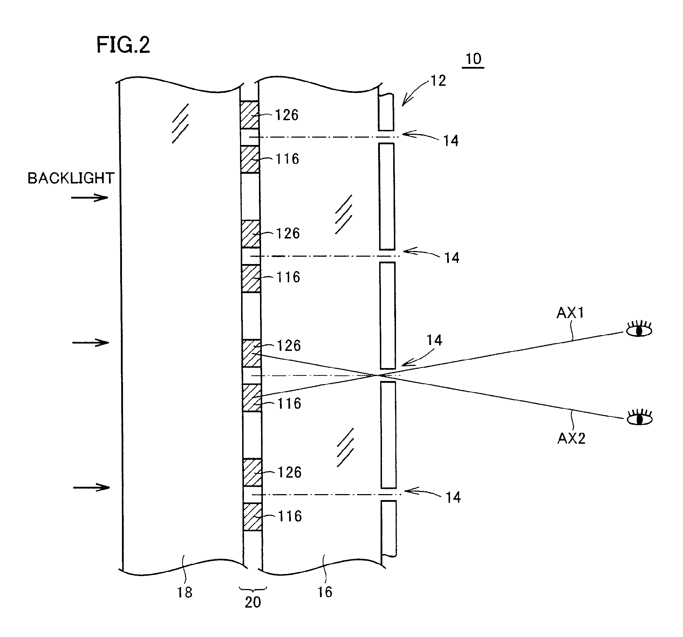

Fig. 2 is a schematic cross-sectional view of display 10 of information processing device 1 according to the embodiment of the present invention. Fig. 2 shows a cross-sectional structure of a front parallax barrier type liquid crystal display device. This display 10 includes a first LCD 116 and a second LCD 126 provided between a glass substrate 16 and a glass substrate 18. Each of first LCD 116 and second LCD 126 includes a plurality of pixels and it is a spatial light modulator for adjusting light from a backlight for each pixel. Here, pixels in first LCD 116 and pixels in second LCD 126 are alternately arranged. A not-shown backlight is provided on a side of glass substrate 18 opposite to glass substrate 16 and light from this backlight is emitted toward first LCD 116 and second LCD 126.

A parallax barrier 12 representing a parallax optical system is provided on a side of glass substrate 16 opposite to the side thereof in contact with first LCD 116 and second LCD 126. In this parallax barrier 12, a plurality of slits 14 are provided in rows and columns at prescribed intervals. A pixel in first LCD 116 and a corresponding pixel in second LCD 126 are arranged symmetrically to each other, with an axis passing through a central position of each slit 14 and perpendicular to a surface of glass substrate 16 serving as the reference. By appropriately controlling positional relation with pixels corresponding to such slits 14 as well as first LCD 116 and second LCD 126 in accordance with an image to be displayed, a prescribed parallax can be created between the user's eyes.

Namely, since each slit 14 in parallax barrier 12 restricts a field of view of each of the user's right and left eyes to a corresponding angle, typically, the user's right eye can visually recognize only pixels in first LCD 116 on an optical axis Ax1, whereas the user's left eye can visually recognize only pixels in second LCD 126 on an optical axis Ax2. Here, by causing the pixels in first LCD 116 and the pixels in second LCD 126 to display corresponding elements of two images having a prescribed parallax, a prescribed parallax can be provided to the user. In the description below, in providing display data to each of first LCD 116 and second LCD 126, to which degree, that is, how much, two input images obtained through image pick-up of the same object should be displaced from each other to generate display data will be referred to as a "display displacement amount."

It is noted that a surface of parallax barrier 12 on the user side is also referred to as a display surface (of display 10) in the description below.

Display 10 is not limited to the front parallax barrier type liquid crystal display device as described above, and for example, a display device of any type capable of providing three-dimensional display, such as a lenticular type display device, may be employed. In addition, display 10 may be configured such that two images different in main wavelength component contained therein are independently displayed and three-dimensional display is provided by having the user wear glasses incorporating two respective color filters different in transmitted wavelength range. Similarly, display 10 may be configured such that two images are displayed with directions of polarization being differed and three-dimensional display is provided by having the user wear glasses incorporating two respective polarizing filters corresponding to the two directions of polarization.

Referring again to Fig. 1, CPU 100 executes a program stored in ROM 102 or the like by developing the program in RAM 104. By executing the program, CPU 100 provides display control processing or accompanying various types of processing as will be described later. It is noted that a program executed by CPU 100 may be distributed on a non-transitory storage medium such as a DVD-ROM (Digital Versatile Disc ROM), a CD-ROM (Compact Disk ROM), a flexible disc, a flash memory, various memory cassettes, and the like. Therefore, information processing device 1 may read a stored program code (instructions) or the like from such a storage medium. In such a case, information processing device 1 should be able to make use of a reading device adapted to a storage medium. Alternatively, in an example where a program as described above is distributed through a network, the distributed program may be installed in information processing device 1 through a not-shown communication interface or the like.

ROM 102 is a device for storing a program to be executed by CPU 100 as described above, various setting parameters and the like in a non-volatile manner. Typically, ROM 102 is implemented by a mask ROM, a semiconductor flash memory or the like.

RAM 104 functions as a work memory for developing a program to be executed by CPU 100 as described above or temporarily storing data necessary for execution of the program.

Input portion 106 is a device for accepting a user's operation, and it is typically implemented by a keyboard, a mouse, a touch pen, a trackball, a pen tablet, various types of buttons (switches), or the like. When input portion 106 accepts any user's operation thereon, it transmits a signal indicating corresponding operation contents to CPU 100.

First image pick-up portion 110 and second image pick-up portion 120 are devices each for obtaining an image through image pick-up of any object. First image pick-up portion 110 and second image pick-up portion 120 are arranged relative to each other such that images of the same object having a prescribed parallax can be picked up as will be described later. First image pick-up portion 110 and second image pick-up portion 120 are each implemented by a CCD (Charge Coupled Device), a CMOS (Complementary Metal Oxide Semiconductor) image sensor, or the like. It is noted that first image pick-up portion 110 and second image pick-up portion 120 are preferably identical in image pick-up characteristics.

First VRAM 112 and second VRAM 122 are storage devices for storing image data for showing images to be displayed on first LCD 116 and second LCD 126 respectively. Namely, display data obtained through display control processing or the like as will be described later, which is performed by CPU 100, is successively written in first VRAM 112 and second VRAM 122. Then, rendering processing in display 10 is controlled based on the display data written in first VRAM 112 and second VRAM 122.

Display 10 includes a first driver 114 and a second driver 124 in addition to first LCD 116 and second LCD 126 described above. First driver 114 is associated with first VRAM 112, while second driver 124 is associated with second VRAM 122. First driver 114 controls turn-on/turn-off (ON/OFF) of pixels constituting first LCD 116 based on the display data written in first VRAM 112. Similarly, second driver 124 controls turn-on/turn-off (ON/OFF) of pixels constituting second LCD 126 based on the display data written in second VRAM 122.

In the description above, a configuration where a pair of input images (stereo images) having a prescribed parallax is obtained by using contained first image pick-up portion 110 and second image pick-up portion 120 has been exemplified, however, an image pick-up portion for obtaining an input image does not necessarily have to be contained in information processing device 1. Typically, a pair of input images (stereo images) may be obtained through a network or the like from a device (typically, a server device) or the like different from information processing device 1.

### [Overview of Operations]

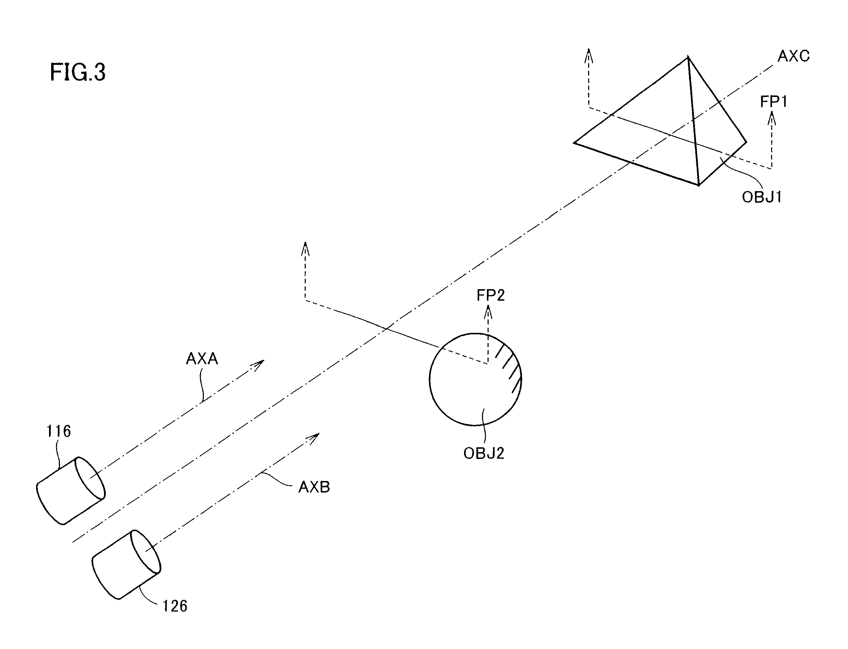

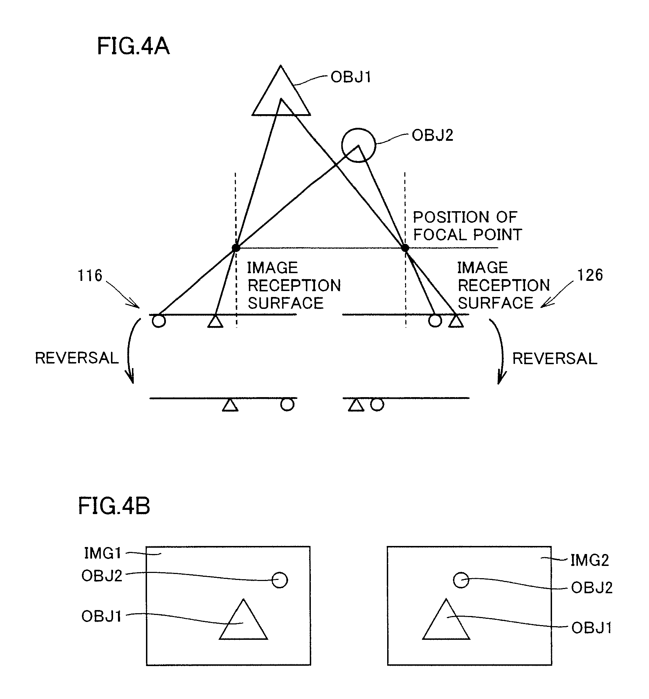

Image matching processing in information processing device 1 according to the present embodiment will now be described. Fig. 3 is a schematic diagram showing a state of a certain object for illustrating image matching processing according to the embodiment of the present invention. Figs. 4A and 4B are schematic diagrams showing images picked up by first image pick-up portion 110 and second image pick-up portion 120 respectively, in correspondence with Fig. 3.

Referring to Fig. 3, in information processing device 1 according to the present embodiment, it is assumed that first image pick-up portion 110 and second image pick-up portion 120 are arranged symmetrically to each other, in parallel to a virtual optical axis AXC perpendicular to the surface of information processing device 1. Namely, first image pick-up portion 110 and second image pick-up portion 120 are arranged relative to each other so as to have a prescribed parallax.

Then, it is assumed that an object OBJ1 and an object OBJ2 are successively arranged from a side farther from first image pick-up portion 110 and second image pick-up portion 120. By way of example, object OBJ1 is a quadrangular pyramid and object OBJ2 is a sphere.

As shown in Fig. 4A, images incident on image reception surfaces of first image pick-up portion 110 and second image pick-up portion 120 respectively depend on fields of view with positions where they are arranged being the center. As the images incident on the image reception surfaces are scanned and reversed, images IMG1 and IMG2 as shown in Fig. 4B (hereinafter also referred to as input images) are obtained, respectively. Namely, as input image IMG1 and input image IMG2 have a prescribed parallax therebetween, it can be seen that a relative distance between object OBJ1 and object OBJ2 in input image IMG1 and a relative distance between object OBJ1 and object OBJ2 in input image IMG2 are different from each other.

Contents of an image shown on display 10 will now be described. Referring again to Fig. 3, for example, if input images are to be three-dimensionally displayed (displayed to have a three-dimensional effect) such that object OBJ1 is located on the display surface of display 10, an image should be displayed such that contents of two input images IN4G1 and IMG2 are superimposed on each other at a position FP 1 in terms of depth in the field. Meanwhile, if the image is to be three-dimensionally displayed such that object OBJ2 is located on the display surface of display 10, the input images should be displayed such that contents of two input images IMG1 and IMG2 are superimposed on each other at a position FP2 in terms of depth in the field.

Namely, an object included in each area displayed in a substantially superimposed manner in input images IMG1 and IMG2 obtained by first image pick-up portion 110 and second image pick-up portion 120 respectively is three-dimensionally displayed on the display surface of display 10. In other words, the user who views display 10 sees the object included in each area displayed in the superimposed manner around the display surface of the display in terms of depth and the user more easily focuses on the object.

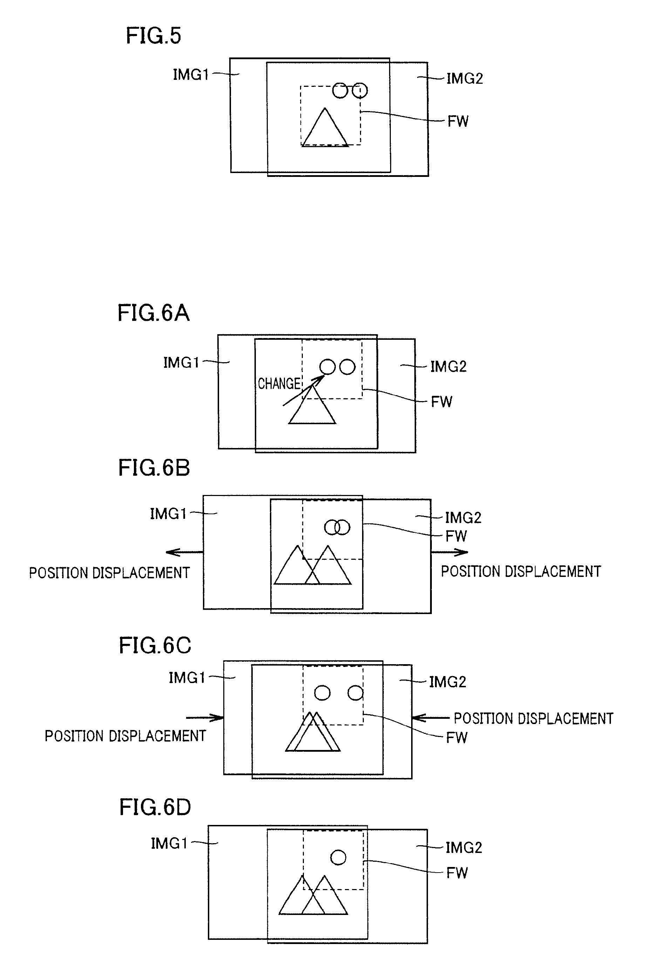

Fig. 5 is a diagram for illustrating relative relation in three-dimensionally displaying input images such that contents included in focused area frames FW set for respective input images IMG1 and IMG2 shown in Fig. 4B are seen around the display surface of the display in terms of depth. Figs. 6A to 6D are diagrams for illustrating exemplary processing when focused area frame FW shown in Fig. 5 is moved.

An example where focused area frame FW is set around object OBJ1 seen in input images IMG1 and IMG2 as shown in Fig. 5 is considered. Here, by adjusting a relative position between input image IMG1 and input image IMG2 such that objects OBJ1 seen in input images IMG1 and IMG2 are substantially superimposed on each other, object OBJ1 can be seen around the display surface of the display in terms of depth. Namely, as a result that an image corresponding to object OBJ1 seen in input image IMG1 and an image corresponding to object OBJ1 seen in input image IMG2 are displayed at substantially the same position on the display surface of display 10, the user can three-dimensionally see the input image with object OBJ1 being seen around the display surface of the display in terms of depth.

The relative position herein refers to an index indicating how much one input image is displaced from the other input image and it corresponds to a relative displacement amount. In addition, a relative displacement amount involved with a correspondence between input image IMG1 and input image IMG2 refers to how much one input image is displaced from the other input image, attention being paid to a prescribed area or an object included in each of input images IMG1 and IMG2.

An example where object OBJ2 is three-dimensionally displayed will now be described with reference to Figs. 6A to 6D. Such processing typically corresponds to a user's scroll operation or the like. In three-dimensionally displaying object OBJ2, as shown in Fig. 6A, focused area frame FW is changed to an area frame around object OBJ2 seen in input images IMG1 and IMG2. At the relative position of input image IMG1 and input image IMG2 shown in Fig. 6A, a position where object OBJ2 seen in input image IMG1 is displayed and a position where object OBJ2 seen in input image IMG2 is displayed do not match with each other. Namely, deviation in position between objects OBJ2 has occurred.

Then, by determining a correspondence between input image IMG1 and input image IMG2, a relative position between input image IMG1 and input image IMG2 is adjusted again. More specifically, the relative position therebetween is successively varied in such a direction as increasing a relative distance between input image IMG1 and input image IMG2 (see Fig. 6B) and/or in such a direction as decreasing a relative distance between input image IMG1 and input image IMG2 (see Fig. 6C). Alternatively, input image IMG1 and input image IMG2 may be moved relative to each other in an up/down direction of the sheet surface.

At each relative position, a matching score between an image within focused area frame FW in input image IMG1 and an image within focused area frame FW in input image IMG2 is successively calculated. This matching score typically refers to an index indicating how similar feature values (color attributes or luminance attributes) of images included in image blocks constituted of a plurality of pixels are to each other based on comparison between the image blocks. Examples of such a method of calculating a matching score include a method of converting a feature value of each pixel constituting each image block into a vector, calculating a correlation value based on an inner product of vectors, and determining this correlation value as the matching score. Alternatively, a method of calculating a sum value (or an average) of absolute values of difference in color between corresponding pixels in the image blocks (for example, a color difference vector, a luminance difference, or the like) and determining a smaller sum value (or an average) as a higher matching score is also available. From a point of view of faster processing, an evaluation method based on a sum value of luminance differences between pixels constituting the image blocks is preferred.

Then, a relative position achieving the highest matching score is determined as a new relative position (see Fig. 6D). In the present embodiment, focused area frame FW common to input image IMG1 and input image IMG2 is set. Then, an area defined by focused area frame FW of input image IMG1 is set as a determination area (a first determination area) in input image IMG1 for determining a correspondence with input image IMG2, and at the same time, an area defined by focused area frame FW of input image IMG2 is set as a determination area (a second determination area) in input image IMG2 for determining a correspondence with input image IMG1

Thus, the first determination area is set in input image IMG1 and the second determination area is set in input image IMG2. Here, the first determination area set in input image IMG1 and the second determination area set in input image IMG2 are positioned so as to correspond to each other. At the same time, the first determination area is set with a display target area frame DA corresponding to a first display target area serving as the reference, while the second determination area is set with display target area frame DA corresponding to a second display target area serving as the reference. Then, a matching score is calculated based on comparison of an image included in the first determination area and an image included in the second determination area with each other.

Thus, each time contents of an image to be displayed on display 10 change, a relative position between input image IMG1 and input image IMG2 is updated (searched for). It is noted that such change in contents of an image to be displayed on display 10 includes, in addition to the scroll operation as described above, a zoom-in display operation, a zoom-out display operation (both of which is also collectively referred to as a "zoom operation"), and the like. In addition, when contents of input images IMG1 and IMG2 are updated as well, similar search processing is performed.

As described above, in determining or updating a relative position between input image IMG1 and input image IMG2, a matching score between the images should successively be calculated. In such an example that the entire input image is subjected to search or resolution (the number of pixels) of an input image is higher, processing load is higher and a longer period of time is also required for processing. Consequently, responsiveness to the user and operability tend to degrade.

Then, in information processing device 1 according to the present embodiment, two types of processing as shown below are mainly adopted to reduce processing load and to enhance responsiveness and operability.

In first processing, a correspondence between input image IMG1 and input image IMG2 is determined in advance, so as to determine a base relative position between input image IMG1 and input image IMG2. Namely, with regard to input image IMG1 and input image IMG2 having a prescribed parallax, an image included in at least partial area of input image IMG1 and an image included in at least partial area of input image IMG2 are compared with each other while varying a corresponding area(s) in input image IMG1 and/or input image IMG2. Here, the area used for comparison is varied under the condition that a relative position between input image IMG1 and input image IMG2 is kept within a first range. Then, based on a result of this comparison, a relative position involved with the correspondence between input image IMG1 and input image IMG2 among relative positions in the first range is determined as the base relative position. In this processing for determining a base relative position, basically, a correspondence between the input images is determined in a state where no information is provided, and a relatively wide range (the first range) is subjected to search.

Further, when a scroll operation or a zoom operation is performed after the base relative position is thus determined, input image IMG1 and input image IMG2 are virtually arranged at each of a plurality of relative positions present in a prescribed range including the determined base relative position, and a corresponding determination area is set for each overlapping range generated in each case. Namely, the first display target area representing an area of input image IMG1 displayed on display 10 and the second display target area representing an area of input image IMG2 displayed on display 10 are set in correspondence with each other.

Furthermore, a correspondence between input image IMG1 and input image IMG2 is determined for each set determination area. As a relative position has roughly been known after the base relative position was determined, an area subjected to search can relatively be narrow. Then, based on the relative position determined in the search processing described above, a display displacement amount between input image IMG1 and input image IMG2 on display 10 is determined. Namely, based on a result of comparison between the image included in at least partial area of input image IMG1 and the image included in at least partial area of input image IMG2 while the relative position of each area is varied within a second range narrower than the first range above, that is, a prescribed range with the base relative position serving as the reference, a relative displacement amount involved with the correspondence between the first display target area and the second display target area among relative positions in the second range is determined as a display displacement amount (a display relative displacement amount).

Thus, in information processing device 1 according to the present embodiment, in principle, processing for determining a correspondence between input image IMG1 and input image IMG2 over a relatively wide range is limited to only once, and if a scroll operation or a zoom operation is subsequently requested, the correspondence is determined only within a narrower range, with the initially obtained base relative position serving as the reference. Thus, since a range for determining a correspondence between images can further be limited, processing load can be reduced.

In second processing, accuracy in search processing for determining a correspondence between images is switched in a plurality of steps from a rough step to a finer step, to thereby reduce processing load. Namely, initially, rough search lower in accuracy is performed, and thereafter fine search higher in accuracy is performed with a relative position obtained as a result of rough search serving as the reference, thus determining an accurate relative position.

More specifically, initially, input image IMG1 and input image IMG2 are virtually arranged at each of a plurality of relative positions as varied by a prescribed first variation, and a matching score between input images is calculated for each resultant position. Then, a relative position achieving the highest matching score among the calculated matching scores is specified as a first relative position.

Then, using the previously specified first relative position as the reference, input image IMG1 and input image IMG2 are virtually arranged at each of a plurality of relative positions as varied by a second variation smaller than the first variation described above and a matching score between input images at each position is calculated. Then, a relative position achieving the highest matching score among the calculated matching scores is specified as a second relative position.

It is noted that search processing may be performed in two or more steps, depending on a size of an input image, processing capability of a device, or the like. In the present embodiment, a configuration where search processing is performed in three steps as will be described later is exemplified. In addition, this second processing is applicable to any of (1) determination of a base relative position included in the first processing described above and (2) subsequent determination of a relative position.

Moreover, it is not necessary to perform both of the first and second processing described above, and only any one of them may be performed.

As described above, in information processing device 1 according to the present embodiment, three-dimensional display is provided based on a result of processing for image matching between input image IMG1 and input image IMG2. Therefore, basically, a still image is used as input image IMG1 and input image IMG2, however, a motion picture is also applicable if the device has processing capability for dealing with every frame in the motion picture.

### [Control Structure]

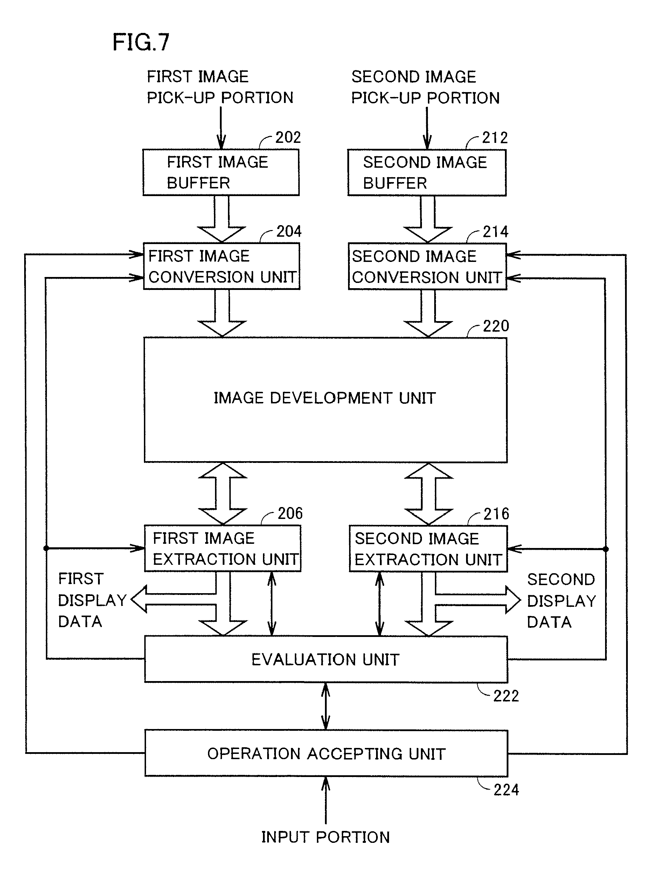

A control structure for providing the processing as described above will now be described. Fig. 7 is a functional block diagram for controlling display 10 of information processing device 1 according to the embodiment of the present invention. Referring to Fig. 7, information processing device 1 includes, as a control structure thereof, a first image buffer 202, a second image buffer 212, a first image conversion unit 204, a second image conversion unit 214, an image development unit 220, a first image extraction unit 206, a second image extraction unit 216, an evaluation unit 222, and an operation accepting unit 224.

First image conversion unit 204, second image conversion unit 214 and evaluation unit 222 are typically provided by execution of a program by CPU 100 (Fig. 1). In addition, first image buffer 202, second image buffer 212 and image development unit 220 are provided as specific areas within RAM 104 (Fig. 1). Operation accepting unit 224 is provided by cooperation of CPU 100 (Fig. 1) and a specific hardware logic and/or driver software. It is noted that the entirety or a part of functional blocks shown in Fig. 7 can also be implemented by known hardware.

First image buffer 202 is associated with first image pick-up portion 110 (Fig. 1) and first image conversion unit 204 and it temporarily stores a raw image picked up by first image pick-up portion 110 (for the purpose of distinction, also referred to as a "first picked-up image"). In addition, first image buffer 202 accepts access from first image conversion unit 204. Similarly, second image buffer 212 is associated with second image pick-up portion 120 (Fig. 1) and second image conversion unit 214 and it temporarily stores a raw image picked up by second image pick-up portion 120 (for the purpose of distinction, also referred to as a "second picked-up image"). In addition, second image buffer 212 accepts access from second image conversion unit 214.

First image conversion unit 204 and second image conversion unit 214 convert a pair of picked-up images obtained through image pick-up by first image pick-up portion 110 and second image pick-up portion 120 (the first picked-up image and the second picked-up image) into input images having a prescribed size, respectively. First image conversion unit 204 and second image conversion unit 214 write the input images generated as a result of conversion into image development unit 220.

Image development unit 220 is a storage area in which data of the input images generated by first image conversion unit 204 and second image conversion unit 214 is developed. As a result of development of the input image data in image development unit 220, the input images are arranged in a virtual space (virtual arrangement).

Contents of processing provided by first image conversion unit 204, second image conversion unit 214 and image development unit 220 will be described with reference to Figs. 8A to 8C.

Figs. 8A to 8C are diagrams for illustrating virtual arrangement of input images in information processing device 1 according to the embodiment of the present invention. It is assumed that the first picked-up image is obtained as a result of image pick-up by first image pick-up portion 110 and the second picked-up image is obtained as a result of image pick-up by second image pick-up portion 120 as shown in Fig. 8A. First image conversion unit 204 and second image conversion unit 214 perform conversion processing of these first picked-up image and second picked-up image, to thereby generate input image IMG1 and input image IMG2, respectively. Then, the generated image data is developed in image development unit 220 as shown in Figs. 8B and 8C. Here, the data (a group of pixels) developed in image development unit 220 is assumed to correspond to pixels constituting display 10 (one display unit of first LCD 116 and second LCD 126) on one-to-one basis. Therefore, common display target area frame DA corresponding to resolution of display 10 (for example, 512 dots × 384 dots or the like) is (virtually) defined for image development unit 220. It is noted that a position of display target area frame DA can be changed to any position in accordance with a user's operation (typically, a scroll operation), initial setting, or the like. Namely, as a result of setting of display target area frame DA common to input image IMG1 and input image IMG2, the area of input image IMG1 determined by display target area frame DA is set as an area of input image IMG1 displayed on display 10 (the first display target area), and at the same time, the area of input image IMG2 determined by display target area frame DA is set as the area of input image IMG2 displayed on display 10 (the second display target area).

As the size of display target area frame DA in image development unit 220 is thus constant, a zoom operation can relatively be performed by changing a size of an input image to be developed in image development unit 220. Namely, when zoom-in display (zoom-in) is indicated, as shown in Fig. 8B, the first picked-up image and the second picked-up image are converted to input images IMG1ZI and IMG2ZI having a relatively large pixel size respectively and data thereof is developed in image development unit 220. On the other hand, when zoom-out display (zoom-out) is indicated, as shown in Fig. 8C, the first picked-up image and the second picked-up image are converted to input images IMG1ZO and IMG2ZO having a relatively small pixel size respectively and data thereof is developed in image development unit 220.

By thus changing as appropriate a size of input images generated by first image conversion unit 204 and second image conversion unit 214, a size relative to display target area frame DA can be varied, to thereby realize a zoom operation.

By changing a position or a size of input image IMG1 and/or input image IMG2 with respect to display target area frame DA as described above, the area of input image IMG1 displayed on display 10 (the first display target area) and/or the area of input image IMG2 displayed on display 10 (the second display target area) are (is) updated.

From another point of view, by changing a relative position of input image IMG1 and/or input image IMG2 with display target area frame DA serving as the reference, a relative position between input image IMG1 and input image IMG2 can also be varied. Alternatively, when a position or a size of the area of input image IMG1 displayed on display 10 (the first display target area) and the area of input image IMG2 displayed on display 10 (the second display target area) is updated by changing a position or a size of input images IMG1 and IMG2 with respect to display target area frame DA, a position or a size of focused area frame FW which is a determination area for input images IMG1 and IMG2 is also changed accordingly.

It is noted that relative positional relation between focused area frame FW corresponding to a determination area and display target area frame DA is preferably maintained constant. For example, focused area frame FW can be set to be located in a central portion or a lower central portion of display target area frame DA. This is because the user often pays attention to a range in a central portion or a lower central portion of an image displayed on display 10. It is noted that any of positions of focused area frame FW and display target area frame DA in image development unit 220 may preferentially be determined, so long as relative positional relation therebetween is maintained. Namely, when a position of focused area frame FW is changed in response to a user's operation, a position of display target area frame DA may be determined in accordance with the resultant position of focused area frame FW. In contrast, when a position of display target area frame DA is changed in response to a user's operation, a position of focused area frame FW may be determined in accordance with the resultant position of display target area frame DA.

For facilitating understanding, though Figs. 8A to 8C show conceptual views in which input images are virtually arranged such that an overlapping range is created therebetween, this virtual arrangement does not necessarily match with actual data arrangement in image development unit 220.

Referring again to Fig. 7, first image extraction unit 206 and second image extraction unit 216 extract image information (including a color attribute, a luminance attribute, and the like) on a prescribed area from input image IMG1 and input image IMG2 developed in image development unit 220 respectively and output the information to evaluation unit 222. In addition, first image extraction unit 206 and second image extraction unit 216 extract first display data and second display data for controlling display contents on first LCD 116 and second LCD 126 of display 10 from image development unit 220, based on a display displacement amount calculated by evaluation unit 222. It is noted that extracted first display data and second display data are written in first VRAM 112 and second VRAM 122, respectively.

Namely, first image extraction unit 206 and second image extraction unit 216 correspond to a determination area setting unit for setting a corresponding determination area for an overlapping range created when input image IMG1 and input image IMG2 are virtually arranged at each of a plurality of relative positions in a prescribed range including the initially determined base relative position. In addition, first image extraction unit 206 and second image extraction unit 216 also correspond to a part of a display control unit for controlling display on display 10 based on a display displacement amount determined in processing which will be described later.

Evaluation unit 222 evaluates a correspondence between input image IMG1 and input image IMG2 extracted by first image extraction unit 206 and second image extraction unit 216 respectively, based on image information of input image IMG1 and input image IMG2. Typically, evaluation unit 222 calculates a matching score (a correlation score) between the input images every prescribed block size (typically, a range of focused area frame FW) and specifies a relative position where the calculated matching score is highest.

Namely, evaluation unit 222 corresponds to a base determination unit for determining a base relative position between input image IMG1 and input image IMG2 by determining a correspondence between input image IMG1 and input image IMG2 having a prescribed parallax. In addition, evaluation unit 222 also corresponds to a display displacement amount determination unit for determining a display displacement amount between input image IMG1 and input image IMG2 by determining a correspondence between input image IMG1 and input image IMG2, with regard to focused area frame FW (the determination area) set for each of input image IMG1 and input image IMG2.

Operation accepting unit 224 is associated with input portion 106 (Fig. 1) and provides a necessary command to first image conversion unit 204, second image conversion unit 214, first image extraction unit 206, second image extraction unit 216, and the like in response to a user's operation of input portion 106. More specifically, when the user indicates a zoom operation, operation accepting unit 224 notifies first image conversion unit 204 and second image conversion unit 214 of an indicated zoom-in ratio or zoom-out ratio or the like. Alternatively, when the user indicates a scroll operation, operation accepting unit 224 notifies first image extraction unit 206 and second image extraction unit 216 of an indicated scroll amount (an amount of movement) or the like. Alternatively, when the user indicates a position of focused area frame FW, operation accepting unit 224 notifies first image conversion unit 204 and second image conversion unit 214 of a new position of focused area frame FW or the like.

### [Image Matching Processing]

Contents of image matching processing for displaying objects included in arbitrarily set focused area frames FW in a manner superimposed on substantially the same position on the display surface of display 10 as shown in Figs. 6A to 6D above will now be described. Namely, in the present image matching processing, a "display displacement amount" indicating how much input image IMG1 and input image IMG2 should be displaced from each other for display on display 10 is determined.

### (1) Processing for Determining Base Relative Position

As described above, initially, a base relative position between input image IMG1 and input image IMG2 is determined. Details of the processing for determining the base relative position will be described below.

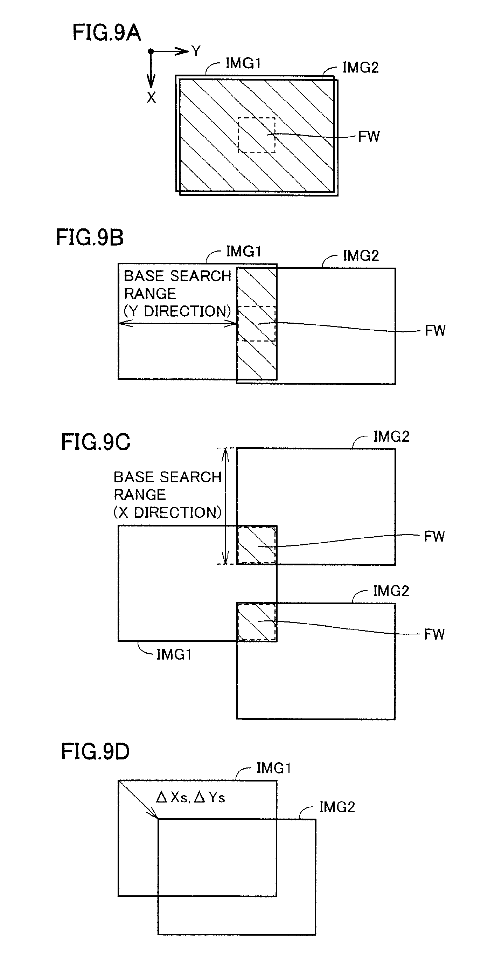

Figs. 9A to 9D are schematic diagrams for illustrating processing for determining a base relative position in information processing device 1 according to the embodiment of the present invention. Referring to Figs. 9A to 9D, a base relative position between input image IMG1 and input image IMG2 is determined by determining a correspondence therebetween. More specifically, a relative position between input image IMG1 and input image IMG2 is successively changed and a matching score between the input images at each relative position is successively calculated. In other words, a position of input image IMG2 with respect to input image IMG1 (or a position of input image IMG1 with respect to input image IMG2) is displaced and a position where images of objects seen in an overlapping range match most is searched for. Therefore, in determining a base relative position, substantially the entire surface where an overlapping range between input image IMG1 and input image IMG2 is created is subjected to search processing.

Namely, a base relative position is determined by varying a relative position of at least partial area of input image IMG1 (an area corresponding to focused area frame FW) and/or at least partial area of input image IMG2 (an area corresponding to focused area frame FW) such that the areas of the input images are arranged and compared within the entire ranges of the input images in a horizontal direction. Thus, an image included in at least partial area of the area of input image IMG1 displayed on display 10 (the first display target area) and/or an image included in at least partial area of the area of input image IMG2 displayed on display 10 (the second display target area) are (is) used as image(s) for comparison, to thereby determine a "display displacement amount" representing a display relative position.

In this processing for determining a base relative position, a matching score of an image within focused area frame FW described above does not necessarily have to be evaluated, and evaluation can be made based on a matching score within an area set in an overlapping range of these input images. The finally determined "display displacement amount," however, represents an amount for three-dimensional display of an object included in focused area frame FW to which the user is paying attention, and from such a point of view, a matching score of an image within focused area frame FW is preferably evaluated also in determining a base relative position. In the description below, processing for evaluating a matching score of an image within focused area frame FW set in an overlapping range of the input images will be exemplified.

A search range in the processing for determining a base relative position (for the purpose of distinction from a search range in processing for determining a display displacement amount which will be described later, hereinafter also referred to as a "base search range") includes such an arbitrary relative position that an overlapping range created when input image IMG1 and input image IMG2 are virtually arranged has a prescribed size or greater necessary for evaluating a matching score. As described above, in evaluating a matching score of an image within focused area frame FW, the prescribed size described above is equal to a size of focused area frame FW. Therefore, in such a case, the base search range includes all existing relative positions from a relative position where a distance between input image IMG1 and input image IMG2 is substantially zero (see Fig. 9A) to a relative position where an overlapping range can maintain a size of focused area frame FW corresponding to the determination area (see Figs. 9B and 9C).

In the processing for determining the base relative position, search (scanning) is preferably carried out in both of an X direction (the up/down direction on the sheet surface) and a Y direction (a left/right direction on the sheet surface). It is noted that search only in the Y direction may be carried out if first image pick-up portion 110 and second image pick-up portion 120 are fixed at positions flush with each other.

Though Fig. 9B illustrates processing for moving input image IMG2 only toward a positive side (+ side) in the Y direction in accordance with a relative position of arrangement of first image pick-up portion 110 and second image pick-up portion 120, input image IMG2 may be moved also toward a negative side (- side) in the Y direction.

For example, assuming that the highest matching score is calculated at such a relative position as shown in Fig. 9D, a relative position between input image EMG1 and input image IMG2 shown in Fig. 9D, that is, a vector (ΔXs, ΔYs), represents the base relative position. This base relative position corresponds to a position deviation corresponding to a parallax in the determination area set in the input images. Therefore, even though focused area frame FW is set at a position different from the determination area used for determining the base relative position, deviation from the base relative position is considered as relatively small. Therefore, by performing search processing based on such a base relative position, image matching processing can be performed faster. It is noted that the vector (ΔXs, ΔYs) of the base relative position is typically defined by the number of pixels.

Assuming any coordinate on input images IMG1 and IMG2 as (X, Y) {here, Xmin ≤ X ≤Xmax; Ymin ≤ Y ≤ Ymax}, a pixel at a coordinate (X, Y) on input image IMG1 corresponds to a pixel at a coordinate (X-ΔXs, Y-ΔYs) on input image IMG2.

### (2) Search Processing in a Plurality of Steps

In the search processing for determining a base relative position as described above, according to a conventional method, a relative position between input images should successively be evaluated by displacing the relative position for each pixel. In the search processing according to the present embodiment, however, a base relative position is searched for faster by switching search accuracy in a plurality of steps. The search processing in a plurality of steps according to the present embodiment will be described hereinafter.

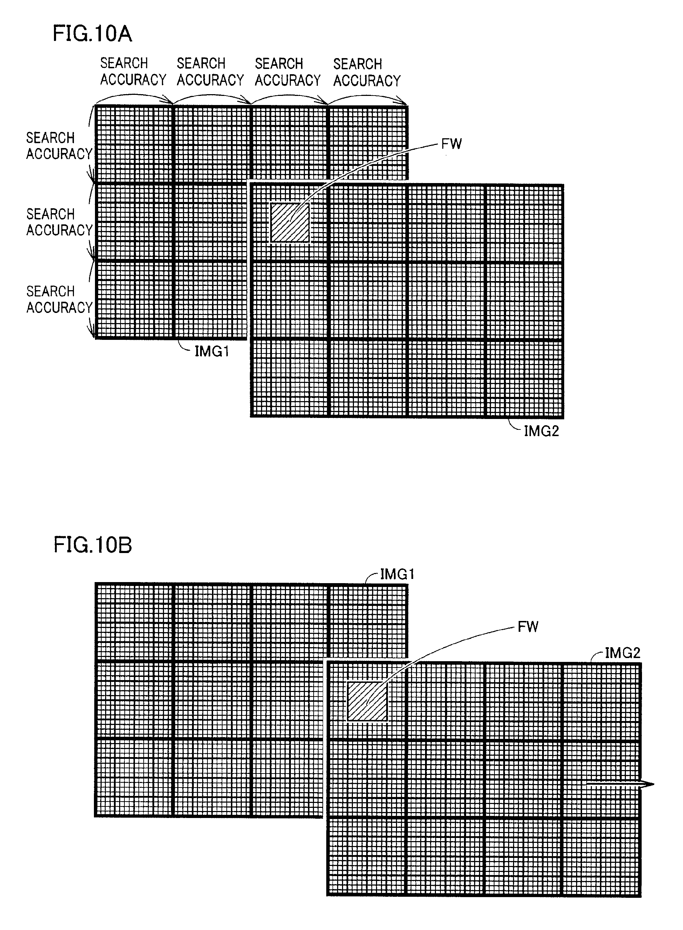

Figs. 10A, 10B, 11A, 11B, 12A, and 12B are diagrams for illustrating search processing according to the embodiment of the present invention. Though a configuration for performing search processing with search accuracy being switched in three steps will be exemplified in the description below, the search accuracy switching steps are not particularly restricted and they can be selected as appropriate in accordance with a pixel size or the like of an input image. For facilitating understanding, Figs. 10A, 10B, 11A, 11B, 12A, and 12B show input images IMG1 and IMG2 of 64 pixels × 48 pixels, however, input images IMG1 and IMG2 are not limited to this pixel size.

In the present embodiment, by way of example, search accuracy is set to 16 pixels in the search processing in the first step, search accuracy is set to 4 pixels in the search processing in the second step, and search accuracy is set to 1 pixel in the search processing in the final third step.

More specifically, as shown in Fig. 10A, in the search processing in the first step, a matching score is evaluated at each of twelve relative positions in total (three in the X direction × four in the Y direction) distant by 16 pixels in the X direction and 16 pixels in the Y direction from a relative position where a distance between input image IMG1 and input image IMG2 is substantially zero. Namely, after calculation of a matching score at a relative position shown in Fig. 10A is completed, a matching score at a relative position distant by 16 pixels is successively calculated as shown in Fig. 10B Then, the relative position achieving the highest matching score among the matching scores calculated in correspondence with these relative positions is specified. After this relative position is specified, the search processing in the second step is performed. It is noted that the matching score is calculated between an image within input image IMG1 corresponding to focused area frame FW and an image within input image IMG2 corresponding to focused area frame FW.

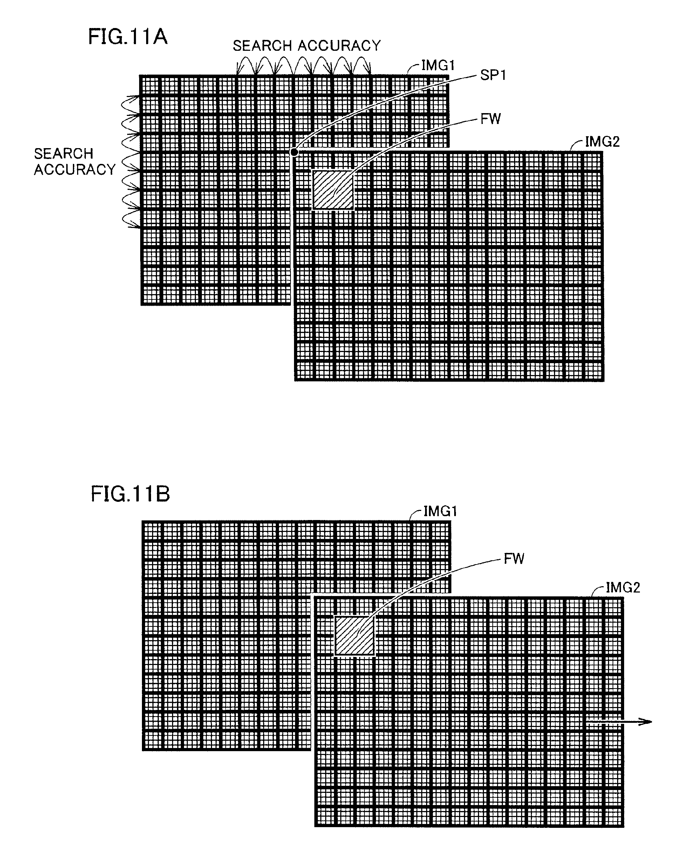

As shown in Fig. 11A, the relative position achieving the highest matching score in the search processing in the first step is defined as a first matching position SP1. Then, in the search processing in the second step, matching scores are evaluated at 64 relative positions in total (eight in the X direction × eight in the Y direction) distant by 4 pixels in the X direction and 4 pixels in the Y direction, with this first matching position SP 1 serving as the reference. Namely, after calculation of a matching score at a relative position shown in Fig. 11A is completed, a matching score at a relative position distant by 4 pixels is successively calculated as shown in Fig. 11B.

Though Fig. 11A shows an example where four relative positions forward in the X direction and three relative positions rearward in the X direction and four relative positions forward in the Y direction and three relative positions rearward in the Y direction, with first matching position SP1 being the center, are set as relative positions for evaluating matching scores, any setting method may be adopted so long as a relative position is set with first matching position SP1 serving as the reference.

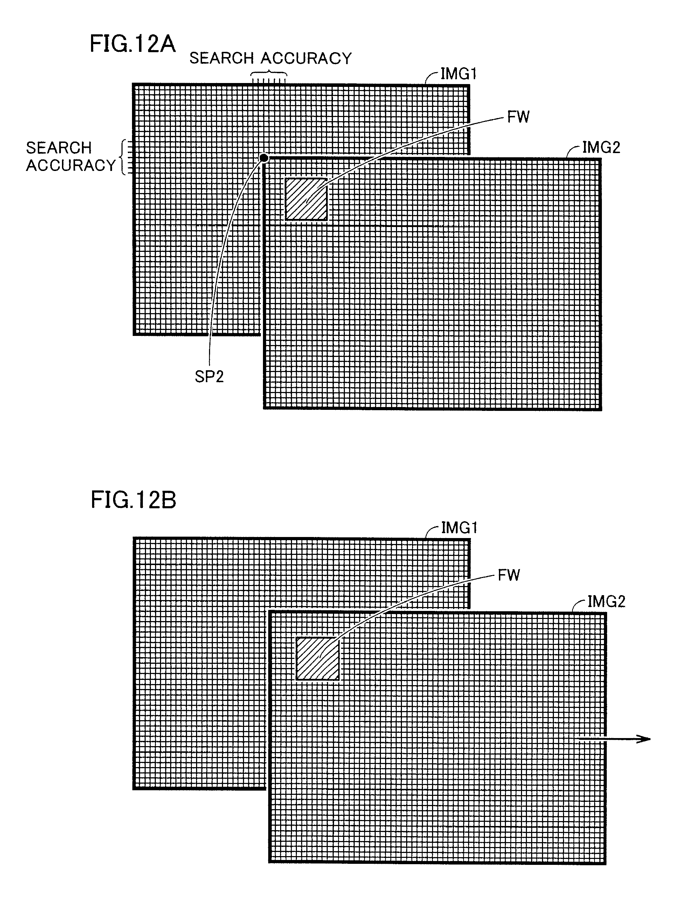

Similarly, as shown in Fig. 12A, the relative position achieving the highest matching score in the search processing in the second step is defined as a second matching position SP2. Then, in the search processing in the third step, matching scores are evaluated at 64 relative positions in total (eight in the X direction × eight in the Y direction) distant by 1 pixel in the X direction and 1 pixel in the Y direction, with this second matching position SP2 serving as the reference. Namely, after calculation of a matching score at a relative position shown in Fig. 12A is completed, a matching score at a relative position distant by 1 pixel is successively calculated as shown in Fig. 12B.

Though Fig. 12A shows an example where four relative positions forward in the X direction and three relative positions rearward in the X direction and four relative positions forward in the Y direction and three relative positions rearward in the Y direction, with second matching position SP2 being the center, are set as relative positions for evaluating matching scores, any setting method may be adopted so long as a relative position is set with second matching position SP2 serving as the reference.

By thus adopting a method of increasing search accuracy in a stepwise fashion, the total number of times of calculation of a matching score can be decreased. For example, in the examples shown in Figs. 10A, 10B, 11A, 11B, 12A, and 12B, if search is carried out in a unit of 1 pixel × 1 pixel as in the search processing in the third step, it is necessary to perform processing for calculating matching scores 3072 times in total (64 × 48). In contrast, in the search processing according to the present embodiment, it is only necessary to perform processing for calculating matching scores 140 times in total (12 times in the first step, 64 times in the second step, and 64 times in the third step).

### (3) Processing for Determining Display Displacement Amount

When the base relative position between input image IMG1 and input image IMG2 is determined in advance as described above, in a prescribed search range including this base relative position (for the purpose of distinction from the base search range described above, hereinafter also referred to as a "display displacement search range"), a matching score between images within focused area frame FW, which is the determination area set for an overlapping range of input image IMG1 and input image IMG2, is successively calculated and a display displacement amount is determined in correspondence with the relative position achieving the highest matching score. Details of the processing for determining a display displacement amount according to the present embodiment will be described hereinafter.

Figs. 13A to 13D are diagrams for illustrating processing for determining a display displacement amount according to the embodiment of the present invention. Initially, as shown in Fig. 13A, it is assumed that a vector (ΔXs, ΔYs) is determined in advance as the base relative position.

The display displacement search range is determined based on the base relative position. For example, assuming that an upper left vertex of input image IMG1 is denoted as O1 and an upper left vertex of input image IMG2 is denoted as O2, vertex O2 of input image IMG2 at the time when input image IMG1 and input image IMG2 are virtually arranged in correspondence with the base relative position is defined as a matching position SP. Then, by using this matching position SP, a display displacement search range covering a prescribed range as shown in Figs. 13B and 13C can be defined. Namely, by moving vertex O2 of input image IMG2 from a left end to a right end of this display displacement search range, a matching score between images within focused area frame FW at each relative position is calculated. Then, the display displacement amount is determined in correspondence with the relative position achieving the highest matching score among the calculated matching scores. This display displacement search range is set to be narrower than the base search range described above. By way of a typical example, the display displacement search range can be defined as a prescribed ratio to a length in the Y direction of input image IMG1, IMG2, and it is set, for example, to approximately 20 to 50% and preferably to approximately 25%. Here, the display displacement search range is defined as a ratio in order to flexibly adapt to change in a pixel size of input images IMG1 and IMG2 in accordance with the user's zoom operation.

In principle, in the processing for determining a display displacement amount, search only in the Y direction (a direction in which a parallax is created between the first and second image pick-up portions) is carried out. This is because a parallax is not caused in the X direction in principle and a relative difference in the X direction is corrected by a predetermined base relative position. Naturally, search may be carried out also in the X direction in addition to the Y direction.

Though Figs. 13B and 13C show examples where focused area frame FW is set by using input image IMG2 as the reference (that is, in a central portion of input image IMG2), focused area frame FW may be set by using input image IMG1 as the reference, or focused area frame FW may be set by using an overlapping range of input image IMG1 and input image IMG2 as the reference.

Assuming that the highest matching score is calculated at a relative position as shown in Fig. 13D as a result of such search processing, the relative position between input image IMG1 and input image IMG2, that is, vector (ΔX, ΔY), represents the display displacement amount. This display displacement amount is used for controlling which image data is to be displayed, regarding pixels in first LCD 116 and second LCD 126 corresponding to slit 14 (Fig. 2) in parallax barrier 12. Namely, display data at a coordinate (X, Y) on input image IMG1 and display data at a coordinate (X-ΔX, Y-ΔY) on input image IMG2 are provided to a pair of pixels corresponding to common slit 14 (Fig. 2).

Namely, with regard to at least partial area of input image IMG1 (the area corresponding to focused area frame FW) and at least partial area of input image IMG2 (the area corresponding to focused area frame FW), a matching score between the images is calculated a plurality of times while a relative position therebetween is varied, and then the area of input image IMG1 displayed on display 10 (the first display target area) and/or the area of input image IMG2 displayed on display 10 (the second display target area) are (is) determined in correspondence with the relative position achieving the highest matching score among the calculated matching scores. Then, position(s) of the area of input image IMG1 displayed on display 10 (the first display target area) and/or the area of input image IMG2 displayed on display 10 (the second display target area) are (is) changed based on the display displacement amount corresponding to the determined display relative displacement amount, and three-dimensional display on display 10 is provided by using a partial image of input image IMG1 and a partial image of input image IMG2 included in the respective areas at the resultant positions.

In addition, the entirety or a part of image data included in an overlapping range of input image IMG1 and input image IMG2 shown in Fig. 13D is provided to display 10. If an effective display size (the number of pixels) of display 10 is greater than the overlapping range of the input images and/or if an overlapping range sufficient for satisfying an aspect ratio of display 10 cannot be set, a portion where no display data is present may be compensated for by providing, for example, monochrome display with black or white.

The search processing in a plurality of steps described above is also applicable to processing for determining a display displacement amount. As detailed contents of the search processing in a plurality of steps have been described above, they will not be repeated.

### [Processing Procedure]

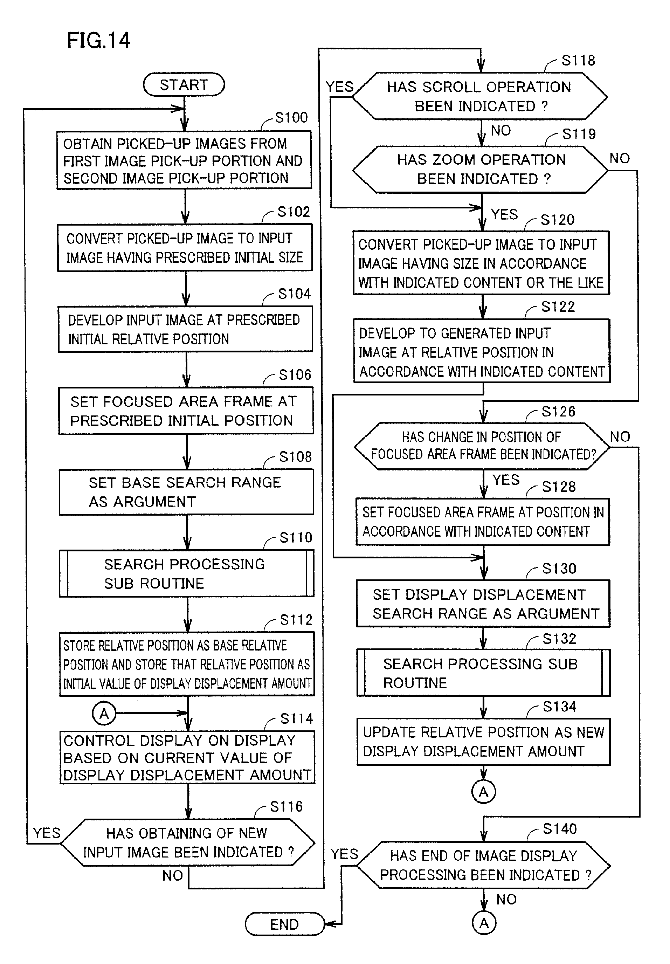

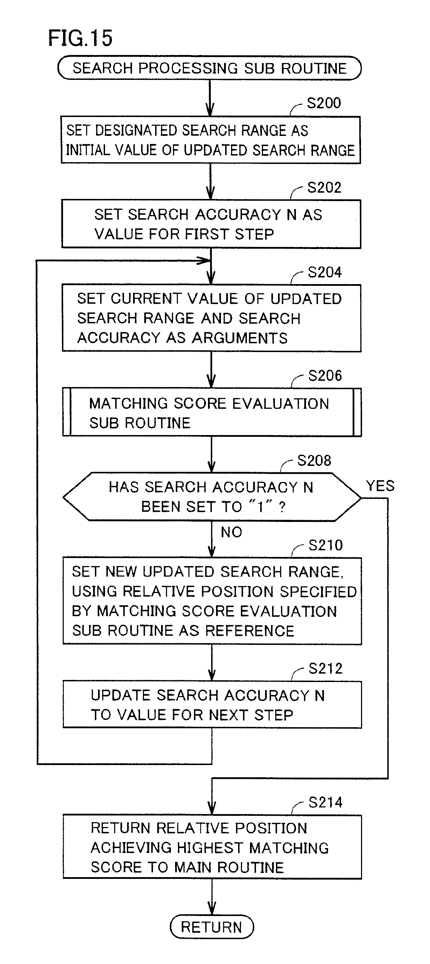

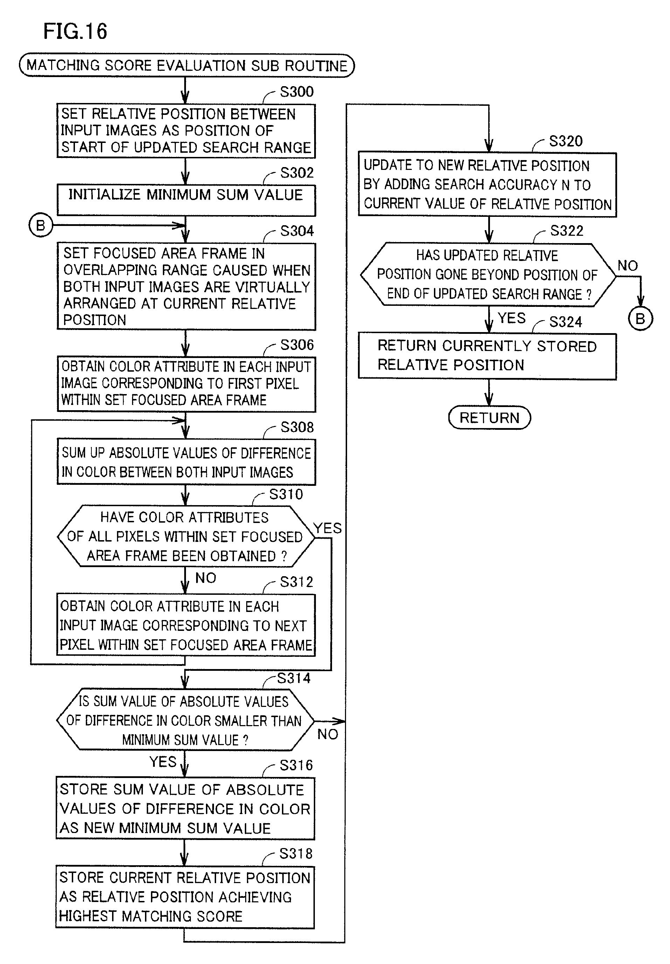

Fig. 14 is a flowchart showing a procedure for overall processing for image display control in information processing device 1 according to the embodiment of the present invention. Fig. 15 is a flowchart showing processing in a search processing sub routine shown in Fig. 14. Fig. 16 is a flowchart showing processing in a matching score evaluation sub routine shown in Fig. 15. Each step shown in Figs. 14 to 16 is typically provided by execution of a program by CPU 100 of information processing device 1.

### (Main Routine)

Referring to Fig. 14, when start of image display processing is indicated, CPU 100 obtains in step S100 picked-up images from first image pick-up portion 110 and second image pick-up portion 120 respectively. Namely, CPU 100 causes first image pick-up portion 110 and second image pick-up portion 120 to pick up an image and causes RAM 104 (corresponding to first image buffer 202 and second image buffer 212 in Fig. 7) to store image data obtained thereby. In subsequent step S102, CPU 100 converts the respective picked-up images to input images IMG1 and IMG2 each having a prescribed initial size. In further subsequent step S104, CPU 100 develops input images IMG1 and IMG2 in RAM 104 (corresponding to image development unit 220 in Fig. 7) at a prescribed initial relative position. In further subsequent step S106, CPU 100 sets focused area frame FW, which is the determination area, at a prescribed initial position.

Thereafter, CPU 100 performs the processing for determining a base relative position shown in steps S108 to S112. Namely, in step S108, CPU 100 sets a base search range as an argument. In subsequent step S110, search processing is performed based on the base search range set in step S108. Namely, the base search range set in step S108 is passed as the argument to a search processing sub routine shown in Fig. 15. As a result of this search processing sub routine, information on the relative position achieving the highest matching score is returned to a main routine. In further subsequent step S112, CPU 100 causes the relative position returned from the search processing sub routine to be stored as the base relative position and causes the relative position to be stored as an initial value of the display displacement amount. Thereafter, the process proceeds to step S114.

In step S114, CPU 100 controls display on display 10 based on a current value of the display displacement amount. Namely, CPU 100 displaces the image data of input images IMG1 and IMG2 developed in RAM 104 by a coordinate in accordance with the current value of the display displacement amount and writes the image data in first VRAM 112 and second VRAM 122. Then, the process proceeds to step S116.

In step S116, CPU 100 determines whether obtaining of a new input image has been indicated or not. When obtaining of a new input image has been indicated (YES in step S116), the processing in step S100 and later is repeated. Namely, the base relative position is determined or updated in response to input of a new input image (a picked-up image). Otherwise (NO in step S116), the process proceeds to step S118. Input of this new input image means update of at least one of input image IMG1 and input image IMG2. A user's indication of determination or update of the base relative position may directly be received. In this case, CPU 100 starts processing in step S108 and later in response to the user's operation and thus the base relative position is determined or updated.

In step S118, CPU 100 determines whether a scroll operation has been indicated or not. When the scroll operation has been indicated (YES in step S118), the process proceeds to step S120. Otherwise (NO in step S118), the process proceeds to step S119.

In step S119, CPU 100 determines whether a zoom operation has been indicated or not. When the zoom operation has been indicated (YES in step S119), the process proceeds to step S120. Otherwise (NO in step S119), the process proceeds to step S126.

In step S120, CPU 100 converts the picked-up images stored in RAM 104 into input images IMG1 and IMG2 having a size in accordance with contents (a zoom-in/zoom-out ratio or a scroll amount) or the like indicated in step S118. Here, in a case where the base relative position is defined by a pixel unit or the like, in accordance with a ratio of size change of the input image, a value of the base relative position is also updated at the same ratio. It is noted that the processing in step S118 may be skipped if the scroll operation is indicated. In subsequent step S122, CPU 100 develops newly generated input images IMG1 and IMG2 in RAM 104 at a relative position in accordance with the contents (a zoom-in/zoom-out ratio or a scroll amount) indicated in step S118. Then, the process proceeds to step S130.

Meanwhile, in step S126, CPU 100 determines whether change in a position of focused area frame FW has been indicated or not. When change in a position of focused area frame FW has been indicated (YES in step S126), the process proceeds to step S128. Otherwise (NO in step S126), the process proceeds to step S140. From a point of view of user friendliness, indication of change in a position of focused area frame FW is preferably given, for example, in such a manner that a touch operation of an image displayed on the display surface of the display is accepted. As parallax barrier 12 is provided on the display surface of display 10, an optical or ultrasonic device is preferably used as such a touch panel device.

In step S128, CPU 100 sets focused area frame FW at a position in accordance with the contents (a resultant coordinate of focused area frame FW or the like) indicated in step S126. Then, the process proceeds to step S130.

In steps S130 to S134, CPU 100 performs the processing for determining a display displacement amount. Namely, in step S130, CPU 100 sets a display displacement search range as the argument. More specifically, CPU 100 determines as the display displacement search range, a range corresponding to a length obtained by multiplying a length of a corresponding side of input image IMG1, IMG2 by a prescribed ratio, in a prescribed direction (in the example shown in Figs. 13A to 13D, the Y direction) with the base relative position serving as the center. The display displacement search range narrower than the base search range is thus set as the search range.

In subsequent step S132, the search processing is performed based on the display displacement search range set in step S130. Namely, using the display displacement search range set in step S130 as the argument, the search processing sub routine shown in Fig. 15 is performed. Information on the relative position achieving the highest matching score as a result of this search processing sub routine is returned to the main routine. In further subsequent step S134, CPU 100 updates the relative position returned from the search processing sub routine as a new display displacement amount. Thereafter, the processing in step S114 and later is repeated.

Meanwhile, in step S140, CPU 100 determines whether end of the image display processing has been indicated or not. When end of the image display processing has been indicated (YES in step S140), the process ends. Otherwise (NO in step S140), the processing in step S114 and later is repeated.

### (Search Processing Sub Routine)

Referring to Fig. 15, initially, in step S200, CPU 100 sets the search range (the base search range or the display displacement search range) set as the argument, as an initial value of an updated search range. This updated search range represents a variant for narrowing a substantial search range in performing search processing in a plurality of steps as shown in Figs. 10A, 10B, 11A, 11B, 12A, and 12B. In subsequent step S202, CPU 100 sets search accuracy N to a value in the first step (in the example described above, 16 pixels). Then, the process proceeds to step S204.

In step S204, CPU 100 sets a current value of the updated search range and the search accuracy as the arguments. In subsequent step S206, CPU 100 performs a matching score evaluation sub routine shown in Fig. 16, based on the updated search range and the search accuracy set in step S204. In this matching score evaluation sub routine, a matching score at each relative position included in the updated search range is evaluated, and the relative position achieving the highest matching score in the updated search range is specified. Information on the relative position achieving the highest matching score in the updated search range as a result of this matching score evaluation sub routine is returned.

In subsequent step S208, CPU 100 determines whether search accuracy N is set to "1" or not. Namely, CPU 100 determines whether the current value of search accuracy N is set to a value in the final step or not. When search accuracy N is set to "1" (YES in step S208), the process proceeds to step S214. Otherwise (NO in step S208), the process proceeds to step S210.

In step S210, CPU 100 sets, using the relative position specified in the matching score evaluation sub routine performed in immediately preceding step S208 as the reference, a range of the relative position ± N (or a range of {relative position - (N-l)} ∼ {relative position + N}) as a new updated search range. Namely, CPU 100 updates the updated search range in accordance with a result of the performed matching score evaluation sub routine. In subsequent step S212, search accuracy N is updated to a value in the next step. In the example described above, new search accuracy N is calculated by dividing the current value of search accuracy N by "4". Then, the processing in step S204 and later is repeated.

Meanwhile, in step S214, the relative position achieving the highest matching score, that has been specified in the immediately preceding matching score evaluation sub routine, is returned to the main routine. Then, the processing in the sub routine ends.

### (Matching Score Evaluation Sub Routine)

Referring to Fig. 16, initially, in step S300, CPU 100 sets a relative position between input image IMG1 and input image IMG2 as a position of start of the updated search range. Namely, CPU 100 virtually arranges input image IMG1 and input image IMG2 at a first relative position present in the updated search range. In subsequent step S302, CPU 100 initializes a minimum sum value. This minimum sum value is a criterion value used for specifying a relative position achieving the highest matching score which will be described later. In the processing which will be described later, a matching score is evaluated based on a sum value as to difference in color between corresponding pixels. Therefore, a smaller sum value means a higher matching score. Thus, in consideration of a dynamic range or the like of a color attribute, a value exceeding a maximum value that can be calculated is set as an initial value of the minimum sum value. Then, the process proceeds to step S304.

In step S304, focused area frame FW is set in an overlapping range created when input image IMG1 and input image IMG2 are virtually arranged at the current value of the relative position. Then, the process proceeds to step S306.

In step S306, CPU 100 obtains a color attribute in each of input image IMG1 and input image IMG2, corresponding to the first pixel within set focused area frame FW. In subsequent step S308, CPU 100 sums up absolute values of difference in color between the input images, based on the obtained color attributes. In further subsequent step S310, CPU 100 determines whether the color attributes of all pixels within set focused area frame FW have been obtained or not. When the color attributes of all pixels within focused area frame FW have been obtained (YES in step S310), the process proceeds to step S314. Otherwise (NO in step S310), the process proceeds to step S312.

In step S312, CPU 100 obtains a color attribute of each of input image IMG1 and input image IMG2 corresponding to the next pixel within set focused area frame FW. Then, the processing in step S308 and later is repeated.

Meanwhile, in step S314, CPU 100 determines whether a sum value of the absolute values of the difference in color is smaller than the minimum sum value (the current value) or not. Namely, CPU 100 determines whether the matching score at the current value of the relative position is higher than the previously evaluated other relative positions or not. When the sum value of the absolute values of the difference in color is smaller than the minimum sum value (YES in step S314), the process proceeds to step S316. Otherwise (NO in step S314), the process proceeds to step S320.

In step S316, CPU 100 causes the sum value of the absolute values of the difference in color calculated immediately before to be stored as a new minimum sum value. In subsequent step S318, CPU 100 causes the current value of the relative position to be stored as the relative position achieving the highest matching score. Then, the process proceeds to step S320.

In step S320, CPU 100 updates the current value of the relative position to a new relative position by adding search accuracy N to the current value of the relative position. Namely, CPU 100 virtually arranges input image IMG1 and input image IMG2 at a relative position distant from the current value of the relative position by search accuracy (N pixel(s)). As the relative position should be changed in both of the X direction and the Y direction in the base search range, the relative position is updated in a prescribed scanning order in this case.

In subsequent step S322, CPU 100 determines whether the updated relative position has gone beyond a position of end of the updated search range or not. Namely, CPU 100 determines whether search processing over the designated updated search range has been completed or not. When the updated relative position has gone beyond the position of end of the updated search range (YES in step S322), the process proceeds to step S324. Otherwise (NO in step S322), the processing in step S304 and later is repeated.

In step S324, CPU 100 returns the currently stored relative position (that is, the relative position finally achieving the highest matching score in the sub routine) to the search processing sub routine. Then, the processing in the sub routine ends.

### [Variation]

In the embodiment described above, a processing example in which scanning in the X direction and the Y direction is carried out in determining a correspondence between input image IMG1 and input image IMG2 has been shown. In addition thereto, however, a correspondence may be determined in consideration of a direction of rotation, trapezoidal distortion, or the like. In particular, such processing is effective in determining a base relative position between input image IMG1 and input image IMG2.

In addition, in the embodiment described above, a processing example where a base relative position is obtained at the time of start of image display processing has been shown, however, the base relative position may be stored in advance as a parameter specific to a device. In this case, such a calibration function is preferably provided to a device at the time of shipment of a product. Further, such a function may be performed at any timing, for example, by a hidden command. The calibration function preferably includes processing for setting image pick-up sensitivity of first image pick-up portion 110 and second image pick-up portion 120 to be substantially equal to each other, because occurrence of an error can be suppressed when a matching score is evaluated based on a difference in color between pixels as described above.

Furthermore, in the embodiment described above, a processing example where a base relative position is updated when a new input image is obtained has been shown. On the other hand, in a case where variation in contents is very small despite the fact that an input image itself is periodically updated as in the case of a stationary camera, the base relative position does not necessarily have to be updated. In this case, the base relative position may be updated only when variation by an amount equal to or more than a prescribed value is produced in contents of an input image.

In the embodiment described above, a relative position between input image IMG1 and input image IMG2 is adjusted such that objects OBJ1 seen in input images IMG1 and IMG2 are substantially superimposed on each other, however, adjustment may be made such that object OBJ1 is displayed at a position displaced by a prescribed displaced amount within a range of a parallax amount tolerable by the user. In this case, for example, in step S114 in the flowchart shown in Fig. 14, display on display 10 may be controlled such that each of the input images is displaced by a prescribed amount from the relative position achieving the highest matching score. By doing so, the input image can be displayed such that object OBJ1 is positioned in the front or in the rear by a prescribed amount relative to the display surface of the display.

Although the present invention has been described and illustrated in detail, it is clearly understood that the same is by way of illustration and example only and is not to be taken by way of limitation, the scope of the present invention being interpreted by the terms of the appended claims.

## Claims

1. A display control program for controlling a display (10) capable of providing three-dimensional display, said display control program causing a computer (1) of said display to function as:
base relative displacement amount determination means (100; 222; S104, S106, S108, S110, S112) for determining as a base relative displacement amount, a relative displacement amount involved with a correspondence between a first image (IMG1) and a second image (IMG2) having a prescribed parallax, based on results of comparison between an image included in at least partial area (FW) of the first image and an image included in at least partial area (FW) of the second image while at least one area thereof is varied such that a relative displacement amount between said first image and said second image is within a first range, among relative displacement amounts in the first range;
display target area setting means (100; 206, 216; S128) for setting a first display target area (DA) which is an area of said first image to be displayed on said display and a second display target area (DA) which is an area of said second image to be displayed on said display such that the first display target area and the second display target area are in correspondence with each other;
display relative displacement amount determination means (100; 222; S130, S132, S134) for determining as a display relative displacement amount, a relative displacement amount involved with the correspondence between the first image and the second image, based on a result of comparison between the image included in at least partial area of the first image and the image included in at least partial area of the second image while at least one area thereof is varied such that the relative displacement amount is within a second range narrower than said first range, which is a prescribed range with said base relative displacement amount serving as a reference, among relative displacement amounts in the second range; and
three-dimensional display processing means (100, 112, 122; 206, 216; S114) for causing said display to provide three-dimensional display of a first partial image included in said first display target area and a second partial image included in said second display target area based on said display relative displacement amount.

2. The display control program according to claim 1, wherein
said display relative displacement amount determination means determines said display relative displacement amount by using the image included in said at least partial area within at least one of said first and second display target areas as an image to be compared.

3. The display control program according to claim 1 or 2, wherein
said three-dimensional display processing means changes a position of at least one of said first and second display target areas based on the display relative displacement amount determined by said display relative displacement amount determination means and causes said display to provide three-dimensional display using said first and second partial images included in the resultant first and second display target areas respectively.

4. The display control program according to any one of claims 1 to 3, wherein
said display relative displacement amount determination means updates said display relative displacement amount (100; S116, S118) in response to change of content of an image to be displayed on said display.

5. The display control program according to claim 4, wherein
said display relative displacement amount determination means is configured to perform display target area change processing for changing a position and/or a size of said first display target area and a position and/or a size of said second display target area in response to an instruction to change a position and/or a size of an area to be displayed in three-dimensional display on said display, and
said display relative displacement amount determination means updates said display relative displacement amount by performing said display target area change processing based on the resultant area to be displayed (100; S118, S130, S132, S134).

6. The display control program according to any one of claims 1 to 5, wherein
said display relative displacement amount determination means sets a first determination area in said first image and sets a second determination area in said second image, said first determination area and said second determination area being set in correspondence with each other, said first determination area being set with said first display target area serving as a reference and said second determination area being set with said second display target area serving as a reference, and
said display relative displacement amount determination means compares an image included in said first determination area and an image included in said second determination area with each other.

7. The display control program according to claim 6, wherein
said display relative displacement amount determination means changes a position and/or a size of said first and second determination areas in response to change in a position and/or a size of said first and second display target areas.

8. The display control program according to claim 6, wherein
said display relative displacement amount determination means sets a determination area frame common to said first and second images, and
said display relative displacement amount determination means sets an area of said first image defined by said determination area frame as said first determination area and sets an area of said second image defined by said determination area frame as said second determination area.

9. The display control program according to any one of claims 1 to 8, wherein
said display target area setting means sets a display target area frame common to said first and second images, and
said display target area setting means sets an area of said first image defined by said display target area frame as said first display target area and sets an area of said second image defined by said display target area frame as said second display target area by setting relative positions of said first and second images with respect to said display target area frame.

10. The display control program according to claim 9, wherein
said relative displacement amount is varied in response to change in the relative position of at least one of said first and second images with respect to said display target area frame.

11. The display control program according to claim 9, wherein
a position and/or a size of said first and second display target areas is varied in response to change in a position and/or a size of said display target area frame in said first and second images.

12. The display control program according to any one of claims 1 to 11, wherein
said base relative displacement amount determination means determines said base relative displacement amount by varying said relative displacement amount of at least one of said at least partial area of said first image and said at least partial area of said second image such that the areas of said first and second images are arranged and compared within the entire ranges of said first and second images in a horizontal direction.

13. The display control program according to any one of claims 1 to 12, wherein
said display target area setting means calculates a matching score between an image included in at least partial area of said first image and an image included in at least partial area of said second image a plurality of times while varying said relative displacement amount, and
said display target area setting means determines at least one of said first display target area and said second display target area in correspondence with the relative displacement amount achieving highest matching score among calculated matching scores (100; S300 to S324).

14. The display control program according to any one of claims 1 to 13, wherein
processing for comparison while said relative displacement amount is varied includes
calculating a matching score at each resultant position by varying said relative displacement amount by a prescribed first variation (S202, S306, S320),
specifying the relative displacement amount achieving highest matching score as a first relative displacement value (S314, S318, S324),
calculating a matching score at each resultant position by varying said first image and said second image by a second variation smaller than the first variation, with said first relative displacement value serving as a reference (S210, S212), and
specifying a second relative displacement value achieving highest matching score (S314, S318, S324).

15. A display control method for controlling a display (10) capable of providing three-dimensional display, the method comprising:
base relative displacement amount determination step (100; 222; S104, S106, S108, S110, S112) of determining a base relative displacement amount involved with a correspondence between a first image (IMG1) and a second image (IMG2) having a prescribed parallax by determining a correspondence between an image within the first image and an image within the second image while varying a relative displacement amount between the first image and the second image at a displacement amount within a first range; and
three-dimensional display control step (100, 112, 122; 206, 216; S114) of realizing three-dimensional display using a first area image which is an image included in at least partial area in said first image and a second area image which is an image included in at least partial area (FW) in the second image, wherein
said three-dimensional display control step includes the steps of
determining a relative displacement amount involved with a correspondence between the first area image and the second area image by determining the correspondence between the first area image and the second area image while varying a relative displacement amount between the first area image and the second area image at a displacement amount within a second range narrower than said first range with said base relative displacement amount serving as a reference, and
realizing three-dimensional display based on the relative displacement amount (100; 222; S130, S132, S134).
